(19) Europäisches Patentamt / European Patent Office / Office européen des brevets

(11) **EP 1 700 141 B1**

(12) **FASCICULE DE BREVET EUROPEEN**

(45) Date de publication et mention de la délivrance du brevet:
**15.06.2011 Bulletin 2011/24**

(21) Numéro de dépôt: **04816602.9**

(22) Date de dépôt: **23.12.2004**

(51) Int Cl.:
*G02B 5/08* (2006.01)   *G21K 1/06* (2006.01)

(86) Numéro de dépôt international:
**PCT/FR2004/050755**

(87) Numéro de publication internationale:
**WO 2005/064364 (14.07.2005 Gazette 2005/28)**

(54) **RESEAU DE DIFFRACTION BIDIMENSIONNEL A EMPILEMENTS MULTICOUCHES ALTERNES ET DISPOSITIF SPECTROSCOPIQUE COMPORTANT CE RESEAU**

ZWEIDIMENSIONALES BEUGUNGSGITTER MIT ALTERNIERENDEN MEHRSCHICHTSTAPELN UND SPEKTROSKOPISCHE EINRICHTUNG MIT DEM GITTER

TWO-DIMENSIONAL DIFFRACTION GRATING WITH ALTERNATING MULTILAYER STACKS AND SPECTROSCOPIC DEVICE COMPRISING SAID GRATING

(84) Etats contractants désignés:
**CH DE DK FR GB LI SE**

(30) Priorité: **23.12.2003 FR 0351192**

(43) Date de publication de la demande:
**13.09.2006 Bulletin 2006/37**

(73) Titulaires:
- **Horiba Jobin Yvon SAS**
  **91165 Longjumeau Cédex (FR)**
  Etats contractants désignés:
  **CH LI**
- **SYNCHROTRON SOLEIL**
  **91190 St. Aubin (FR)**
  Etats contractants désignés:
  **DE DK FR GB SE**

(72) Inventeurs:
- **POLACK, François**
  **F-75013 PARIS (FR)**
- **IDIR, Mourad**
  **F-91120 PALAISEAU (FR)**
- **JOURDAIN, Erick**
  **F-93170 BAGNOLET (FR)**
- **LIARD-CLOUP, Audrey**
  **F-92340 BOURG-LA-REINE (FR)**

(74) Mandataire: **Michelet, Alain et al**
  **Cabinet HARLE et PHELIP**
  **14-16, rue Ballu**
  **75009 Paris (FR)**

(56) Documents cités:
US-A- 4 798 446    US-A- 4 915 463
US-A- 5 119 231    US-A- 5 958 605

- **HEINZMANN U: "X-RAY GRATINGS AND PROJECTION LITHOGRAPHY BY MEANS OF LATERALLY STRUCTURED MULTILAYERS" JOURNAL DE PHYSIQUE III, EDITIONS DE PHYSIQUE, PARIS, FR, vol. 4, no. 9, 1 septembre 1994 (1994-09-01), pages 1625-1637, XP000468494 ISSN: 1155-4320**
- **VERNON S P ET AL: "CHIRPED MULTILAYER COATINGS FOR INCREASED X-RAY THROUGHPUT" OPTICS LETTERS, OPTICAL SOCIETY OF AMERICA, WASHINGTON, US, vol. 18, no. 9, 1 mai 1993 (1993-05-01), pages 672-674, XP000362414 ISSN: 0146-9592**
- **U. KLEINEBERG ET AL.: "Mo/Si Multilayer Coated Laminar Phase and Ruled Blaze Gratings for the Soft X-Ray Region" J.OF ELECTRON SPECTROSCOPY AND RELATED PHENOMENA, 1996, pages 389-392, XP002326213**
- **TROUSSEL P ET AL: "TESTS OF 250-NM PITCH MULTILAYER GRATINGS IN THE XUV LOW-ENERGY RANGE ON THE SUPER-ACO STORAGE RING AT LURE" REVIEW OF SCIENTIFIC INSTRUMENTS, AMERICAN INSTITUTE OF PHYSICS. NEW YORK, US, vol. 63, no. 4, 1 avril 1992 (1992-04-01), pages 2125-2131, XP000300692 ISSN: 0034-6748**

**Description**

La présente invention concerne un réseau bidimensionnel de diffraction pour la dispersion de flux lumineux polychromatique ou quasi-monochromatique, son procédé de fabrication, ainsi que des monochromateurs et spectromètres comportant ces réseaux.

On entend par réseau bidimensionnel un réseau qui s'étend à la fois dans la direction de la surface du substrat et dans la direction perpendiculaire à cette surface.

Les réseaux par réflexion sont classiquement utilisés en lumière infrarouge, visible, ultraviolette et jusque dans le domaine des rayons X lorsque les énergies de photons ne dépassent pas 2000 eV. Fabriqués dans divers matériaux (Silicium, quartz, ...), les réseaux pour les courtes longueurs d'onde ont généralement un profil lamellaire, c'est-à-dire un profil approchant au mieux un créneau rectangulaire. Ce profil peut être obtenu par attaque chimique ou par bombardement ionique d'une surface parfaitement polie à travers un masque de photolithographie. C'est ce mode de fabrication qui donne la meilleure régularité de profil ainsi que la meilleure raideur des flancs de gravure et, de ce fait, les meilleures performances en terme de lumière diffractée par rapport à la lumière parasite diffusée. Les réseaux lamellaires ont l'inconvénient de diffracter la lumière dans de nombreux ordres (positifs ou négatifs). Un choix judicieux du rapport cyclique, creux / période, permet cependant de réduire l'intensité des ordres pairs. L'efficacité maximale dans un ordre donné est obtenue lorsque le rayonnement diffracté par la partie supérieure du créneau et celui diffracté par sa partie basse sont en phase, soit

$$h\left(\cos\alpha_I + \cos\alpha_d\right) = \begin{cases} \lambda/2 & \text{pour les ordres impairs} \\ \lambda & \text{pour les ordres pairs} \end{cases}$$

où l'angle d'incidence $\alpha_i$ et l'angle de diffraction $\alpha_i$ sont repérés par rapport au plan de la surface du réseau de diffraction. On parle alors d'angles d'incidence rasante ou d'angles de rasance.

La surface du réseau est ensuite recouverte d'une couche mince d'un matériau de forte densité, par exemple du Platine ou de l'Or. En raison du très faible écart à 1 des indices optiques des matériaux dans le domaine des rayons X, ces revêtements ne possèdent les propriétés de réflectivité souhaitables que pour une incidence très rasante du rayonnement, d'autant plus faible que l'énergie de photons est élevée.

Or dans un monochromateur ou un spectromètre, la longueur d'onde est sélectionnée par l'angle d'incidence de la lumière sur le réseau. Le fait d'être restreint à des angles d'incidence rasants réduit la gamme de longueur d'onde dans laquelle un même réseau peut être utilisé. De plus des effets "d'ombrage" réduisent significativement l'efficacité de diffraction. Ces effets "d'ombrage" résultent du fait que certaines parties de la surface du réseau, soit ne peuvent recevoir directement le rayonnement incident, soit ne peuvent rayonner directement dans la direction de l'ordre utile.

Il est aussi d'usage habituel de faire varier graduellement les paramètres de ces réseaux en fonction de la position sur la surface, le plus souvent la période (HETTRICK M. et al.; Appl. Opt. 23 (1983) 3921, HETTRICK M.; Appl. Opt. 22 (1984) 3221) mais également la profondeur des traits (FRANKS A., US 3,980,883) sur la surface du substrat.

Il est connu d'utiliser des réseaux à échelette à faible angle de blaze pour améliorer l'efficacité de diffraction d'un réseau. Le rayonnement est réfléchi par chaque facette du réseau, dans une direction privilégiée renforçant ainsi "efficacité de diffraction dans un ordre particulier. C'est l'effet de "blaze". Toutefois la réflectivité limite la déviation à la même gamme angulaire que celle des réseaux lamellaires. L'angle de blaze reste donc faible. Pour les énergies de photons de l'ordre du keV, l'angle des facettes est voisin de 1°, ce qui rend très difficile la fabrication de tels réseaux blazés.

On connaît également des réseaux gravés revêtus d'un empilement multicouche. Ces réseaux consistent en un réseau gravé dans un substrat tel que décrit précédemment, sur lequel est déposé un traitement réflecteur formé d'un empilement de couches minces. Cet empilement est constitué de couches minces d'un élément dense (haut indice) et d'un autre élément plus léger (bas indice) alternativement déposées sur le substrat. Le principe de fonctionnement d'une tel revêtement réflecteur, sensiblement identique à celui des empilements multi diélectriques pour le visible, est basé sur la pénétration du rayonnement à l'intérieur d'un grand nombre de couches et le comportement coopératif de chacun des interfaces lorsque la condition de mise en phase suivante est satisfaite :

$$e\sin\alpha = k\,\lambda/4$$

où e est l'épaisseur de la couche, $\alpha$ l'angle d'incidence rasante sur l'interface d'un rayonnement et $\lambda$ la longueur d'onde du rayonnement.

Le brevet US 4,915,463 (BARBEE, T. W., Jr.) (Figure 1) décrit un réseau de diffraction par réflexion comprenant un réseau lamellaire de période D et un ensemble de multicouches synthétiques de période d qui est un empilement de couches alternées de deux matériaux différents. La relation que la période, d, de l'empilement et la profondeur de gravure, H, des marches du réseau doivent satisfaire pour ce type de réseau est précisée égale à:

$$H/d = k/m \left(1 - \frac{2\delta}{\sin^2 A}\right)^{1/2} \qquad (1)$$

où $\delta$ est l'écart à 1 de l'indice moyen de l'empilement, $A$ l'angle d'incidence rasante, $k$ étant un entier arbitraire et $m$ l'ordre de Bragg dans lequel le réseau multicouches est utilisé.

Cependant, il est ici implicitement considéré que le rapport H /d est grand. Le terme correctif de cette formule (1) tire son origine du fait que le rayonnement se propageant dans la multicouche d'indice moyen 1-$\delta$ et celui qui se propage dans le vide ne sont pas en phase à une profondeur donnée. Les considérations qui conduisent à la formule (1) font état, de plus, de simplifications qui ne sont valides que pour un réseau faiblement dispersif employé sous une incidence assez proche de la normale.

Heinzmann U (J. de Physique III; vol.4, no.9, p:1625-1637; 01/09/1994) (XP0004.6.8 494) met en évidence que la relation entre la profondeur de gravure et la période du multicouche contrôle l'efficacité dans les différents ordres de diffraction. Il relève qu'une annulation de l'ordre 0 se produit si la profondeur de gravure est égale à un nombre impair de fois la demi période de l'empilement.

Dans l'exemple étudié par Heinzmann, la profondeur de gravure est égale à 5 fois la demi période de la multicouche. Il en résulte la présence d'un réseau de surface dont la profondeur de modulation est importante, 5d/2 pour 19d/2 d'épaisseur de réseau bi-périodique. Ce réseau qui fait alterner vide et multicouche, n'est pas optimisé et produit un couplage entre l'ordre utile et les ordres indésirables. La performance du réseau en est par conséquent affectée et l'annulation de l'ordre 0 reste incomplète. De plus l'utilisation en incidence normale induit une efficacité sensiblement identique dans les ordres +1 et -1. Un autre réseau bidimensionnel est décrit dans le document "Mo /Si Multilayer Coated Laminar Phase and Ruled Blaze Gratings for the Soft X-Ray Region", U. Kleineberg et al., 80, (1996), 389-392, XP 002326213.

L'application d'un revêtement multicouche sur un réseau gravé a également été étendue à des réseaux blazés, avec notamment l'espoir de renforcer l'effet de blaze à des ordres très élevés pour bénéficier de très fortes dispersions {RIFE J.C. et al. ; Physica Scripta 41 (1990) 418}.

On connaît encore des réseaux formés par gravure profonde d'un empilement multicouche. A la suite d'un premier article de Erko {ERKO A.I. et al. ; Nucl. Instrum. Meth. A 333 (1993) 599} un grand nombre de publications a été consacré aux méthodes de fabrication et aux propriétés de ce type de réseaux. On notera en particulier parmi ces publications, une étude de réseaux multicouches amorphes W/Si ayant une périodicité latérale de 800 nm basée sur une représentation tridimensionnelle dans l'espace réciproque desdits réseaux par Mikulik {Mikulik P. et al.; J. Phys. D : Appl. Phys. 34 (2001) A188}. Si la gravure est profonde et si les flancs d'attaque des profils gravés sont verticaux, on réalise une structure bi-périodique, habituellement appelée réseau lamellaire multicouche.

Ces réseaux sont bi-périodiques mais ne sont pas continus et présentent des lacunes à l'intérieur de leur structure. Il en résulte que la transition brutale entre les matériaux du multicouche et le vide a tendance à envoyer de la lumière dans tous les ordres de diffraction, comme cela se produit avec les réseaux lamellaires classiques à revêtement métallique. Ainsi si ces réseaux multicouches offrent une amélioration de l'efficacité de diffraction des réseaux, ils ne permettent pas la sélection de certains ordres de diffraction.

L'objectif de la présente invention est de proposer un réseau de diffraction, simple dans sa conception et économique, se comportant comme un cristal synthétique et permettant l'obtention de symétries dans la maille élémentaire afin de réduire ou éliminer la lumière diffractée dans certains ordres tout en renforçant l'efficacité de diffraction des ordres autorisés.

A cet effet, l'invention concerne réseau bidimensionnel de diffraction pour la dispersion de flux lumineux polychromatique ou quasi-monochromatique tel que défini dans la revendication 1.

Dans différents modes de réalisation, la présente invention concerne également les caractéristiques suivantes :

- le substrat sur lequel repose le réseau épais possède un relief de surface comprenant des traits parallèles entre eux, de périodicité p et étant en phase avec l'un des empilements,
- le substrat a un relief de surface présentant un profil triangulaire, d'une largeur à la base p/2, d'une profondeur d/2 au plus et de périodicité p/2 en phase avec les empilements,
- le substrat a une surface supérieure plane,
- le substrat a une surface supérieure concave, convexe, sphérique ou asphérique,
- la période p des traits du réseau varie continûment selon la position à la surface du substrat,

- la période d des couches minces varie continûment selon la position à la surface du substrat,
- le réseau bidimensionnel de diffraction comporte une couche de protection déposée sur lesdits premier et deuxième empilements de couches,
- le réseau bidimensionnel de diffraction comporte une couche d'accrochage entre le substrat et la première couche de chaque empilement,
- le réseau bidimensionnel de diffraction comporte une couche de blocage entre matériaux successifs,
- la répartition des indices des matériaux formant une maille élémentaire présente des symétries ou antisymétries de telle sorte que lors de son utilisation au moins un ordre de diffraction est affaibli ou renforcé,
- la répartition des indices des matériaux formant la maille élémentaire présente une symétrie par rapport au centre de ladite maille élémentaire,
- la maille élémentaire est formée de deux matériaux ayant des indices optiques différents,
- la période p du réseau et la période d des empilements varient continûment selon la position à la surface du réseau de telle sorte que le rapport d/p reste en tout point constant.

L'invention concerne enfin un dispositif spectroscopique pour l'analyse ou le filtrage d'une source lumineuse comportant au moins un réseau de diffraction tel que défini dans la revendication 1.

Dans différents modes de réalisation, la présente invention concerne également les caractéristiques suivantes :

- le dispositif est destiné à recevoir un faisceau lumineux comportant au moins une radiation centrée sur une longueur d'onde $\lambda_0$ émise par une source lumineuse, la radiation diffractée de longueur d'onde $\lambda_0$ par ledit réseau formant un angle de déviation D avec le faisceau incident.

Selon l'invention,

- le réseau bidimensionnel de diffraction est orienté de façon telle que la normale au réseau fasse un angle B constant à ± 10% avec la bissectrice à l'angle de déviation D,
- l'angle D et la longueur d'onde $\lambda_0$ de ladite radiation vérifiant l'équation suivante:

$$2\sin\left(\frac{D}{2}\right) x \sin B = q\frac{\lambda_0}{p}$$

où p est la période du réseau dans le plan de sa surface, q est l'ordre de diffraction dans cette direction,
- l'angle B est défini par la relation

$$\tan B = \frac{qd}{rp}\left(1 - \frac{(1-\bar{n})}{\left(\frac{r\lambda_0}{2d}\right)^2 - \left(\frac{qd}{rp}\right)^2}\right)$$

où d est la période du réseau selon l'axe perpendiculaire à la surface du réseau et r l'ordre de diffraction dans cette direction et $\bar{n}$ l'indice moyen du réseau,
- le dispositif spectroscopique comprend un dispositif dispersif comportant ledit réseau bidimensionnel de diffraction et un miroir placé avant ou après celui-ci,
- ledit miroir comportant une structure multicouche comprenant les mêmes matériaux et ayant la même périodicité dans une direction normale à sa surface que lesdits premier et deuxième empilements de couches du réseau de diffraction,
- ledit miroir étant orienté de façon à recevoir le faisceau lumineux diffracté sous un angle d'incidence D/2 par rapport à sa surface de telle sorte que le faisceau diffracté par le réseau et transmis par l'ensemble du dispositif reste parallèle au faisceau incident

Dans différents modes de réalisation possibles, l'invention sera décrite plus en détail en référence aux dessins annexés dans lesquels :

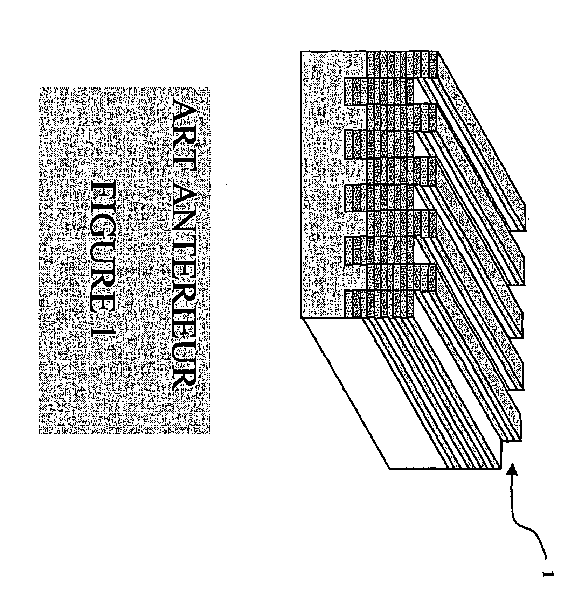

- la figure 1 est une représentation schématique d'un réseau multicouche de l'art antérieur;
- la figure 2 est une représentation schématique d'un réseau de diffraction selon un premier mode de réalisation ;
- la figure 3 est une représentation schématique d'un réseau de diffraction selon un deuxième mode de réalisation de l'invention;
- la figure 4 montre la construction d'Ewald permettant de déterminer pour une incidence rasante définie par le vecteur d'onde $\vec{k}_i$ et à une longueur d'onde $\lambda$, les ordres diffractés caractérisés par les vecteurs d'onde $\vec{k}_{-1,1}$, $\vec{k}_{-4,2}$, $\vec{k}_{-12,3}$, $\vec{k}_{-13,3}$;
- la figure 5 est une représentation schématique d'un réseau de diffraction selon un troisième mode de réalisation ;
- la figure 6 est une représentation schématique d'une simulation numérique de l'efficacité de diffraction d'un réseau en fonction de l'incidence rasante dans les ordres -1, 0, +1 pour une réalisation du réseau de diffraction de la figure 2 à une longueur d'onde de 1nm, et comparée à celle d'un réseau métallique classique;
- la figure 7 est une représentation schématique de mesures de l'efficacité de diffraction d'un réseau en fonction de l'incidence rasante dans les ordres -1, 0, +1 pour la réalisation du réseau de diffraction de la figure 2 correspondant à la simulation numérique présentée sur la figure 6;
- la figure 8 est une représentation schématique de mesures de l'efficacité de diffraction de ce réseau en fonction de l'angle de déviation D pour trois incidences fixes du rayonnement dans les ordres -1, 0, +1 pour le réseau de diffraction de la figure 2, et à une longueur d'onde de 1nm;
- les figures 9 à 24 représentent différents exemples de réseaux de diffraction ;

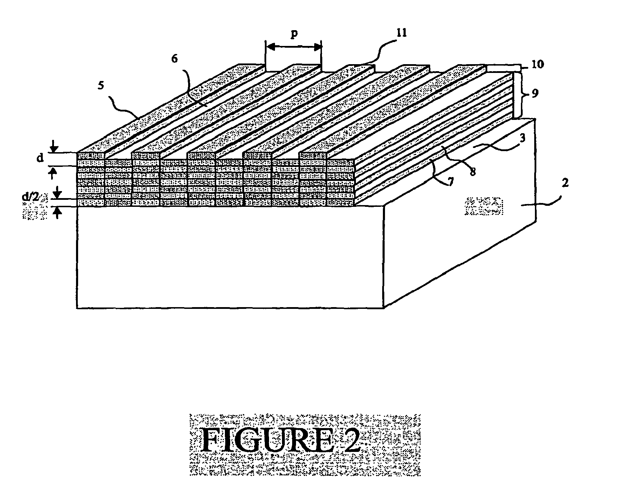

Le réseau de diffraction comprend dans un premier mode de réalisation, non couvert par la revendication 1, représenté sur la figure 2, un premier 5 et un deuxième 6 empilements de couches minces bipériodiques de période d dans le sens de l'épaisseur, comportant au moins dix périodes (non représentées), chaque période d étant constituée de couches d'au moins deux matériaux 7,8 différents. Les empilements 5, 6 forment des traits contigus 11 de largeur p/2, parallèles entre eux et répétés périodiquement dans une direction parallèle à la surface 3 du substrat 2 avec une période p. Le deuxième empilement 6 est alterné avec le premier empilement 5 et décalé en épaisseur de d/2, de sorte que les empilements 5 et 6 constituent un réseau épais 9 porté par le substrat 2.

le réseau épais 9 est formé de la répétition doublement périodique d'une même maille élémentaire, surmonté d'un réseau mince de surface 10 ayant une amplitude au plus égale à d/2.

Le réseau de diffraction est destiné à être mis en oeuvre avec des faisceaux incidents quasi-monochromatiques ou polychromatiques.

Le réseau mince de surface 10 comprend des traits comportant le premier matériau 7, d'épaisseur au plus de d/2, périodique de période p et séparés par des vides d'épaisseur au plus de d/2.

L'énergie diffractée par un réseau mince de surface 10 est relativement faible, si bien que les propriétés que nous allons énoncer sont peu affectées.

Les premier et deuxième matériaux 7, 8 occupent avantageusement des volumes identiques (Figure 2), c'est à dire que la hauteur de la couche du premier matériau 7 est égale à la hauteur de la couche du deuxième matériau 8 soit d/2, et la profondeur du relief du réseau mince de surface 10 est avantageusement la plus faible possible.

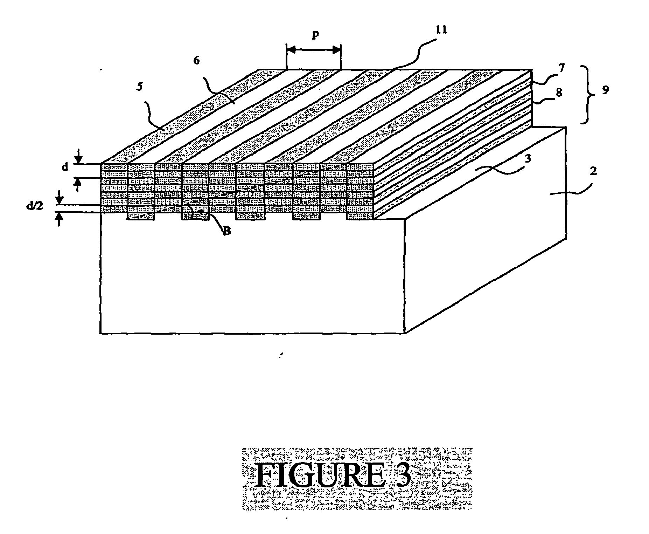

Le substrat 2 sur lequel repose le réseau épais 9 peut présenter un relief de surface comprenant des traits 11 parallèles entre eux, de périodicité p et étant en phase avec l'un des empilements (Figure 3). Le substrat 2 peut être composé de matériaux différents de ceux du réseau épais 9 ou des mêmes matériaux.

Le substrat 2 peut présenter une surface 3 supérieure plane, concave, convexe, sphérique ou asphérique.

Le réseau épais 9 peut comprendre deux ou plusieurs matériaux différents ($m_1$, $m_2$, $m_3$). Il peut également comprendre des couches de blocage empêchant l'interdiffusion des matériaux entre les couches. Il peut également comprendre des couches d'accrochage. Le réseau épais 9 ainsi que le réseau mince de surface 10 peuvent comprendre une couche de protection déposée sur la surface 3.

La Figure 3 montre un réseau de diffraction dans un deuxième mode de réalisation. Ce réseau de diffraction comprend un substrat 2 et un réseau épais 9 constitué d'un premier 5 et d'un deuxième 6 empilements de couches minces. Pour fabriquer ce réseau de diffraction, on réalise en premier lieu sur un substrat 2 d'un matériau approprié un dépôt de résine d'épaisseur constante. On fait ensuite interférer sur cette couche deux ondes lumineuses cohérentes issues de dieux points distincts de l'espace, éventuellement situés à l'infini et provenant à l'origine d'un laser, dans des conditions telles que la couche de résine intercepte le volume d'interférence des deux ondes, l'énergie lumineuse présente dans ce volume provoquant la polymérisation ou la dépolymérisation de la résine aux endroits d'interférence constructive.

On fait ensuite agir un solvant pour dissoudre sélectivement soit la résine qui a été polymérisée soit la résine qui n'a pas été polymérisée, pour faire apparaître les traits formant les motifs en relief de surface du substrat 2. Ceci constitue un procédé de gravure in-situ.

Avantageusement on sera généralement conduit à amplifier la profondeur de modulation par un procédé de gravure sélective (gravure chimique, ionique réactive ou autres) analogue à ceux utilisés en microélectronique.

Le substrat 2 ainsi préparé présente à sa surface 3 un relief de traits 11 parallèles ayant un profil lamellaire rectangulaire, éventuellement trapézoïdal avec une largeur de flanc faible, de période p, de profondeur h=d/2 et de rapport cyclique 1/2, c'est à dire qu'il présente la même largeur des faces hautes et basses du profil. Le rapport d/p est choisi de façon à obtenir un angle de blaze de quelques degrés selon la relation (7).

Sur ce substrat 2, on dépose, par un procédé de dépôt in-situ, alternativement des couches minces d'un premier 7 et d'un deuxième 8 matériaux (respectivement $m_1$, $m_2$) choisis pour présenter entre eux une forte variation d'indice dans le domaine spectral d'intérêt. Le réseau de diffraction de l'invention ainsi formé comprend un réseau épais 9 comportant un premier empilement 5 de couches minces, périodique de période d, comportant au moins dix périodes, formant des traits de largeur p/2 parallèles entre eux, séparés, espacés périodiquement avec une période p et un deuxième empilement 6 de couches minces périodique de période d d'agencement identique au premier empilement 5, formant des traits 11 de largeur p/2 parallèles entre eux, séparés, espacés périodiquement avec une même période p, ledit deuxième empilement 6 étant intercalé avec le premier empilement 5, contigu avec le premier empilement 5 et déphasé selon la direction perpendiculaire au substrat 2 de la profondeur de gravure h=d/2. Les couches de chacun des deux matériaux 7, 8 ont la même épaisseur, cette dernière étant égale à la profondeur de gravure h=d/2 du substrat 2 sous-jacent. La distribution des deux matériaux 7, 8 présente donc une symétrie par rapport au centre de la maille élémentaire.

Il résulte de la construction indiquée ci-dessus que le réseau de diffraction présente au départ à sa surface un réseau mince de surface 10, formé par la différence de hauteur entre le premier empilement 5 et le deuxième empilement 6 de couches minces.

Avantageusement, le réseau de diffraction ne présente pas de réseau mince de surface 10 comme représenté sur la figure 3. Pour cela, des moyens sont mis en oeuvre pour polir cette surface comme par exemple l'usinage ionique.

L'atténuation rapide de l'onde incidente à l'intérieur du réseau épais 9, comprenant lesdits premier et deuxième empilements 5, 6 fait que les couches profondes sont peu ou pas atteintes par le rayonnement.

Dans un mode de réalisation particulier, le pas p du réseau ainsi que la période d des couches minces sont variables mais le rapport d/p reste cependant le même en tout point. Les valeurs de d et p peuvent ainsi typiquement varier de 15% sur 100 mm.

Une approche théorique a été développée pour expliquer la possibilité de renforcer considérablement l'efficacité de diffraction de ce réseau de diffraction pour un petit nombre d'ondes diffractées autorisées, voire une seule. Selon cette théorie, un réseau épais 9 de ce type qui présente une double périodicité dans deux directions différentes perpendiculaire et parallèle à la surface 3 du substrat 2, se comporte comme un cristal synthétique. Si une onde incidente de vecteur d'onde $\vec{k_i}$ se propage dans ladite structure doublement périodique 4, elle ne peut se coupler et donc donner lieu à des ondes diffractées de vecteur d'onde $\vec{k_d}$ que si la différence $\vec{K}$ entre les deux vecteurs d'onde, appelée vecteur de diffusion, est un vecteur du réseau réciproque de la structure bi-périodique du réseau de diffraction considéré (condition de Bragg),

$$\vec{K} = q\vec{K_x} + r\vec{K_z}, \qquad (2)$$

où $\vec{K_x}$, et $\vec{K_z}$, de modules $K_x = 2\pi/p$, $K_z = 2\pi/d$, sont les vecteurs fondamentaux du réseau réciproque du réseau épais 9, et q et r sont deux nombres entiers appelés ordres de diffraction dans la direction considérée. Notons que les deux ondes se propagent dans un même milieu d'indice moyen $\overline{n} = \dfrac{n_1 + n_2}{2}$ avec $n_1$ l'indice du premier matériau 7 et $n_2$ celui du deuxième matériau 8, et par conséquent :

$$\left| k_d \right| = \left| k_i \right| \qquad (3)$$

Ainsi, contrairement à un réseau de diffraction classique, toute onde incidente ne donne pas nécessairement lieu à des faisceaux diffractés. Toutefois la condition de Bragg n'est pas aussi stricte que pour un cristal parfait, car la pénétration verticale du rayonnement est limitée par l'absorption à quelques dizaines de paires de couches. Il en résulte une incertitude sur les valeurs de $K_z$ qui donnent un couplage avec une onde diffractée $\Delta K_z/K_z = 1/N$, où N est le nombre de périodes des premier et deuxième empilements 5, 6 de couches minces qui interviennent dans la formation de l'onde diffractée. Dans le sens horizontal, il est possible d'éclairer une grande surface de réseau et l'incertitude sur $K_x$ est très petite.

Une autre analogie intéressante avec l'optique des cristaux est que la structure de la maille élémentaire contribue à autoriser ou à interdire des ordres de diffraction particuliers. L'efficacité du couplage entre l'onde incidente, de

vecteur d'onde $\vec{k}_i$ et l'onde diffractée $\vec{k}_d$, de vecteur d'onde $\vec{k}_d=k_{q,r}=k_i+\mathbf{K}_{q,r}$ est proportionnelle à la valeur pour $\vec{K}=\vec{K}_{q,r}$ de la transformée de Fourier de la distribution des variations de l'indice optique dans la maille élémentaire. Par exemple, dans le cas ou la maille élémentaire est constituée de deux matériaux $m_1$ et $m_2$ 7, 8, cette distribution d'indice s'exprime

par $\dfrac{n_1 - n_2}{2}$ $\mathcal{M}(x,z)$, où $\mathcal{M}(x,z)$ est une fonction qui vaut +1 dans le premier matériau 7 et -1 dans le deuxième matériau 8 des empilements 5, 6. Le facteur de structure F(q,r) qui décrit l'intensité relative entre les différents ordres, est donc proportionnel à $|TF[\mathcal{M}]|^2$ où TF[M] est la transformée de Fourrier de la fonction $\mathcal{M}(x,z)$. Si les premier et deuxième matériaux 7, 8 sont distribués de façon relativement égale et régulière dans la maille, le facteur de structure décroît rapidement avec les indices. Dans le cas particulier d'un réseau de rapport cyclique 1/2 dans les deux directions, i.e. une répartition égale et symétrique de deux matériaux 7, 8 autour du centre de la maille élémentaire, il est facile de montrer que le facteur de structure est nul pour toutes les diffusions d'ordre pair en x comme en z et qu'il se réduit, à un facteur près, à :

$$\begin{cases} F(2q, r) = 0 \\ F(q, 2r) = 0 \\ F(2q+1, 2r+1) = \dfrac{1}{(2q+1)^2 \,(2r+1)^2} \end{cases} \qquad (4)$$

D'une façon générale toute symétrie ou antisymétrie dans la distribution des indices des différents matériaux 7, 8 constituants la maille élémentaire conduit à des annulations ou des réductions du facteur de structure à certains noeuds du réseau réciproque.

En définitive, si on prend en compte la deuxième condition, équation (3) $|k_d|=|k_l|$, l'onde incidente n'est capable de se coupler efficacement qu'à un très petit nombre d'ondes diffractées, voire une seule, et l'efficacité de diffraction dans ces ordres privilégiés est considérablement renforcée. Ce renforcement est formellement équivalent à un effet de blaze.

Nous allons maintenant décrire les conditions d'accord pour qu'un ordre donné soit sélectionné par le réseau de diffraction dans un mode de réalisation particulier. Par convention la direction de propagation des ondes sera repérée par les angles de rasance, c'est à dire l'angle $\alpha$, formé par le vecteur d'onde $\vec{k}$ avec un plan parallèle à la surface 3 du substrat 2, $\alpha_i$ est l'angle d'incidence et $\alpha_d$ l'angle de diffraction. Les ondes se propageant vers le haut correspondent à des angles positifs, celles qui se propagent vers le bas à des angles négatifs. Le rayonnement incident a une longueur d'onde $\lambda$ dans le milieu d'indice moyen $\bar{n}$, et le plan d'incidence est normal aux traits du réseau. Dans ces conditions l'angle de diffraction de l'ordre d'indices q et r, et l'angle d'incidence vérifient les relations suivantes déduites des équations (2) et (3).

$$\sin\alpha_d - \sin\alpha_i = r\,\frac{\lambda}{d} \qquad (5)$$

$$\cos\alpha_d - \cos\alpha_i = q\,\frac{\lambda}{p} \qquad (6)$$

Ces équations peuvent se réécrire pour faire apparaître l'angle de déviation D et l'angle d'asymétrie B tel que $\alpha_i = -D/2 + B$ et $\alpha_d = D/2 + B$ :

$$\begin{cases} 2\sin D/2 \quad \cos B = r\,\dfrac{\lambda}{d} \\[2ex] 2\sin D/2 \quad \sin B = q\,\dfrac{\lambda}{p} \end{cases} \qquad (7)$$

Pour satisfaire la condition d'accord à toute longueur d'onde, il faut employer le réseau avec un angle d'asymétrie constant B tel que :

$$B = \text{Atan}\,\frac{q\,d}{r\,p} \qquad\qquad (8)$$

Cette relation exprime que la diffraction dans l'ordre d'indices q et r peut être interprétée dans le langage de la cristallographie, comme une réflexion de Bragg sur le plan réticulaire de mêmes indices q et r (cf fig. 3). Elle peut également se comprendre, dans le langage de l'optique classique, comme une condition de blaze.

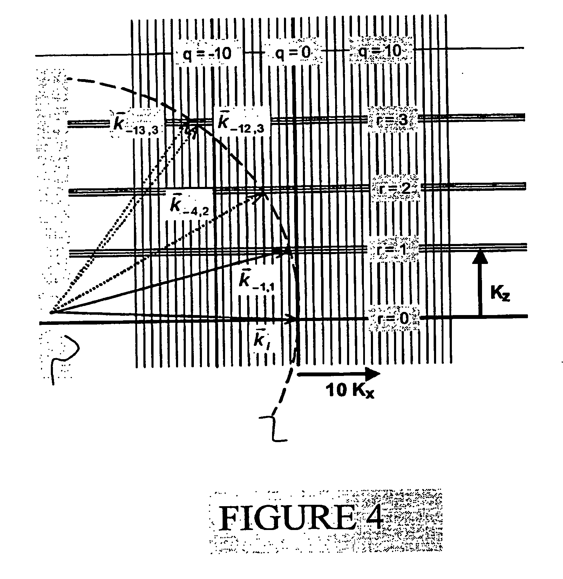

On peut alors déterminer par une construction d'Ewald les vecteurs d'onde des ordres susceptibles d'être diffractés (Figure 4). Les extrémités des vecteurs d'onde 9 $\vec{k}_i$ et $\vec{k}_d = \vec{k}_{q,r}$ appartiennent à un même cercle 10 de rayon $2\pi/\lambda$ et sont localisées sur les noeuds du réseau réciproque de pas $2\pi/p$ et $2\pi/d$. Ces noeuds sont élargis dans la direction $\vec{K}_z$ en raison de la faible pénétration du rayonnement dans l'épaisseur de l'empilement 5, 6. Le réseau se comporte dans une étroite bande de longueur d'onde comme un réseau plan ordinaire qui disperse angulairement la lumière. L'intensité diffractée décroît rapidement autour de la longueur d'onde centrale définie par les relations (5) et (6). Le maximum d'intensité diffractée est obtenu quand la condition de blaze est respectée, c'est à dire lorsque le réseau est incliné d'un angle constant B par rapport à la bissectrice des directions d'incidence et d'émergence donnée par la relation (8). Avantageusement, l'angle d'asymétrie B est choisi petit, i.e. inférieur à 5 degrés.

En supposant que le réseau est éclairé sous une incidence donnée par un faisceau monochromatique de longueur d'onde $\lambda$ et que ce faisceau satisfait à la condition de Bragg (7) d'indices q et r, il peut exister d'autres faisceaux diffractés à la même longueur d'onde $\lambda$ mais dans une direction différente. Un réseau conçu pour travailler sous incidence rasante aura un angle de blaze, B, faible et par conséquent une très grande différence entre les périodes d et p. Il s'ensuit que les autres ordres diffractés auront des indices r variant comme la suite des nombres entiers, mais des indices q variant approximativement comme $r^2$. La rapide décroissance du facteur de structure (défini plus haut à la formule (4)) avec les indices implique un très faible couplage de l'onde incidente avec des ordres parasites. En pratique, on choisira de travailler dans les ordres q= +1, r=1 ou q= -1, r=1 et on s'efforcera d'obtenir un rapport cyclique voisin de 1/2 dans les deux directions. Les ordres correspondant à des indices q ou r pairs ne pouvant se propager, l'essentiel de l'énergie diffractée à la longueur d'onde $\lambda$, le sera dans l'ordre choisi avec une efficacité très renforcée ; le reste sera absorbé dans le réseau.

Si maintenant le réseau, orienté pour diffracter suivant l'ordre (q,r), est éclairé par un faisceau polychromatique, les équations (5) et (6) montrent que les longueurs d'onde harmoniques de la longueur d'onde d'accord, $\lambda'=\lambda/k$, seront diffractées dans la même direction que l'ordre (q,r) dans des ordres d'indices q'=k q, r'=k r. Compte tenu de la rapide décroissance du facteur de structure on peut attendre une forte réduction de la contamination du faisceau diffracté par les harmoniques supérieures, ce qui est un des inconvénients majeurs des réseaux unidimensionnels classiques dans le domaine des rayons X. Dans un mode de réalisation particulier où le réseau de diffraction a un rapport cyclique 1/2, décrit plus haut, et est utilisé dans les ordres (1,1) ou (-1,1), la première harmonique diffractée est l'harmonique 3 et son efficacité de diffraction théorique, en négligeant les variations d'indice optique, est seulement 1/81 de celle de l'harmonique 1.

Cependant, les directions d'ondes que nous avons utilisées jusqu'ici sont celles des ondes qui se propagent à l'intérieur du réseau de diffraction d'indice moyen $\bar{n} = \dfrac{n_1 + n_2}{2}$ avec $n_1$ l'indice du premier matériau 7 et $n_2$ celui du deuxième matériau 8 et la longueur d'onde $\lambda$ utilisée est celle d'un faisceau incident dans ce milieu, soit $\lambda = \lambda_0/\bar{n}$ où $\lambda_0$ est la longueur d'onde dans le vide du faisceau incident. Dans un but d'exemplification nous donnerons ci-après une détermination simplifiée de l'angle de blaze B applicable au domaine de longueur d'onde VUV et rayons X. Dans le domaine du rayonnement VUV et X, l'indice optique étant très proche mais inférieur à 1 il est usuel de noter $\bar{n}=1-\bar{\delta}$. La relation entre l'angle de propagation d'une onde dans le vide $\alpha'$ et son angle a dans le milieu du réseau est alors

$$\cos \alpha' = \overline{n} \cos \alpha \;\; \Rightarrow \;\; \sin \alpha = \sqrt{\sin^2 \alpha' - 2\overline{\overline{\delta}}} \qquad (9)$$

Si l'angle d'incidence de l'onde dans le vide est suffisamment éloigné de l'angle de réflexion totale tout en restant rasant, $\sqrt{2\overline{\overline{\delta}}} \ll \sin\alpha' \ll 1,$ on peut utiliser l'approximation sin$\alpha$=sin$\alpha$'-$\overline{\delta}$/sin$\alpha$'. On obtient alors des expressions corrigées équivalentes aux équations (7) :

$$\begin{cases} 2 \sin D'/2 \;\; \cos B' \left( 1 - \dfrac{\overline{\delta}}{\sin^2 D'/2 - \sin^2 B'} \right) = r \dfrac{\lambda_0}{d} \\[4mm] 2 \sin D'/2 \;\; \sin B' = q \dfrac{\lambda_0}{p} \end{cases} \qquad (10)$$

On notera que la relation de diffraction par le réseau latéral reste inchangée. Seule change la condition de blaze à laquelle il faut apporter une correction dépendant de la longueur d'onde. En estimant D' et B' à leur valeur non corrigée, on obtient une valeur approchée de l'angle de blaze:

$$\tan B' = \frac{qd}{rp} \left( 1 - \frac{\overline{\delta}}{\left( r\lambda_0/2d \right)^2 - \left( qd/rp \right)^2} \right) \qquad (11)$$

Les propriétés fondamentales du réseau qui vient d'être décrit sont dues à

-   une double périodicité latérale et en profondeur, et à une utilisation en rayons X sous incidence rasante avec des angles de blaze faibles, typiquement dans les ordres (1,1) ou (-1,1), qui ont pour effet de limiter les longueurs d'onde qui peuvent être diffractées pour une incidence donnée dans un ordre donné.
-   une répartition des matériaux 7, 8 régulièrement alternée tels que les rapports cycliques dans des directions parallèles et perpendiculaires à la surface 3 du substrat 2 soient proches de 1/2, qui limite le nombre d'ordres effectivement diffractés et en renforce l'efficacité.

L'invention concerne également un réseau à multicouches alternées dans un dispositif de spectroscopie. L'exploitation des avantages précédemment exprimés suppose de garder sensiblement constant l'angle d'asymétrie B et donc de faire seulement varier l'angle de déviation dudit réseau pour accorder le dispositif à la longueur d'onde. Il est alors avantageux d'inclure dans le dispositif de spectroscopie, soit avant soit après le réseau, un miroir dont le rôle est de ramener la direction du faisceau sortant du dispositif dans l'axe du faisceau entrant Ce miroir travaille constamment sous une incidence rasante égale à D/2. Pour augmenter la réflectivité de ce miroir il est encore avantageux de recouvrir sa surface d'un empilement de couches minces formé des mêmes matériaux que les premier et deuxième empilements du réseau. La période d' qu'il convient de donner à l'empilement multicouche du miroir pour obtenir une réflectivité maximale est donnée par la relation de Bragg

$$2\sin\left( \frac{D}{2} \right) = r'\left( \frac{\lambda}{d'} \right) \qquad (12)$$

ou r' est l'ordre de la réflexion de Bragg. En comparant aux équations (7) on voit que pour r'=r la période optimale de l'empilement de couches minces du miroir est d' = d cos$B$. Cependant lorsque l'angle B est petit, i.e. B < 5 degrés, la variation de période induite $\left( \dfrac{d-d'}{d} \right)$ est négligeable devant la largeur du profil de réflectivité $\left( \dfrac{\Delta\lambda}{\lambda} \right).$ Correlativement la perte d'efficacité impliquée par l'utilisation pour le miroir d'un empilement de période d au lieu de d'est négligeable.

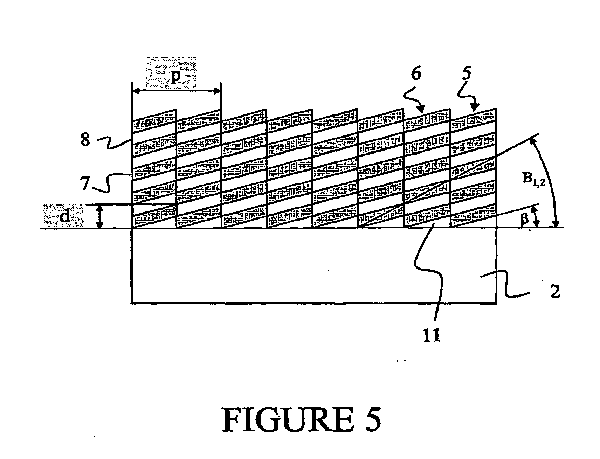

Un troisième mode de réalisation, non couvert par la revendication 1, est présenté à la Figure 5. Ce réseau de diffraction comprend un substrat 2 dans lequel est réalisé un réseau à profil triangulaire de période p/2 et de profondeur d/2=p/2 tan$\beta$ où $\beta$ est la pente des bords du trait 11 de forme triangulaire. Ce substrat 2 est ensuite recouvert d'un empilement régulier de couches d'un premier 7 et deuxième 8 matériaux, chacune ayant une épaisseur égale à d/2, de façon à former un réseau de diffraction comprenant un premier empilement de couches minces 5 et un deuxième empilement de couches minces 6, chacun de période p et d, comme décrit précédemment. L'angle d'asymétrie B, ou encore angle de blaze caractérisant la diffraction dans l'ordre d'indices (q, r) reste défini par $B = \text{Atan}\left(\dfrac{q\,d}{r\,p}\right)$, mais la direction préférentielle de blaze diffère et est celle de l'ordre (1,2), $B_{1,2} \approx 2\beta$ (Figure 5).

Dans la pratique il est extrêmement difficile, voire même impossible de réaliser des motifs gravés présentant des profils abrupts perpendiculaires à la surface moyenne du substrat 2. On obtient généralement des motifs de forme trapézoïdale. Le facteur de structure de la maille élémentaire d'un réseau de diffraction réalisé par le dépôt de couches alternées sur un tel substrat 2, n'est pas exactement nul pour les ordres de diffraction pairs. Cependant si la largeur des flancs des trapèzes est suffisamment faible par rapport à la période p, le réseau de diffraction ainsi obtenu permet de sélectionner les ordres de diffraction et de renforcer l'efficacité de diffraction dans ces ordres autorisés.

On décrira maintenant différents exemples de réseaux de diffraction fabricables industriellement montrant l'excellence des résultats obtenus à partir de ces réseaux. Le domaine spectral couvert par ces réseaux s'étend des rayons X (exemple 1) à l'infrarouge en passant par l'ultraviolet (exemples 2 à 6).

## EXEMPLE 1

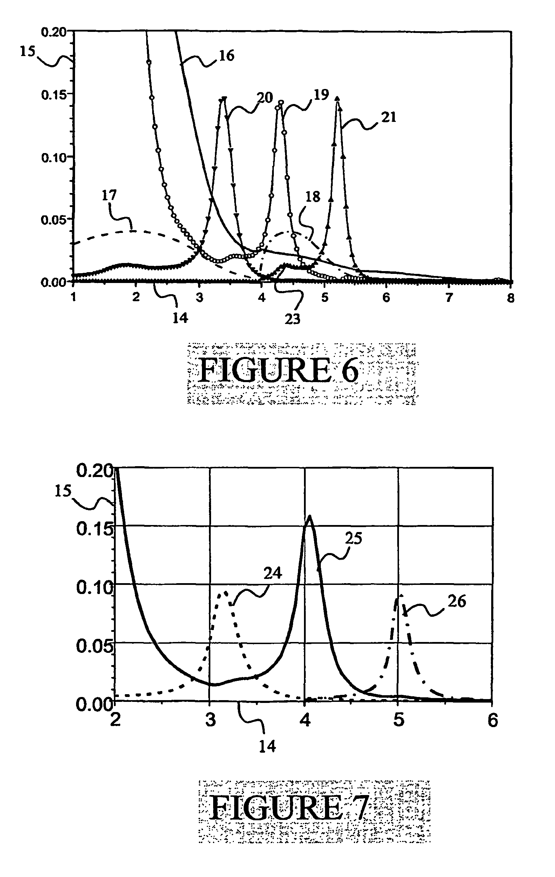

Les figures 6-8 décrivent un premier mode de mise en oeuvre d'un réseau de diffraction. Ce réseau de diffraction comprend un substrat 2. Ce substrat 2 est un réseau ayant un relief de surface formé sur une surface plane 3. Ledit relief comprend des traits 11 parallèles entre eux ayant un profil lamellaire de profondeur h = 3,8 ± 0,2 nm. La densité de traits 11 est de 2400 traits/mm, soit une période p = 417 nm. Le rapport creux/période de ce réseau est de 0,70 ± 0,01, c'est à dire que la partie haute des traits 11 a une largeur $l_1$ = 125 ± 4 nm et la partie basse une largeur $l_2$ = 292 ± 4 nm. Les traits 11 ont une forme trapézoïdale dont la pente des bords 13 du trait 11 est comprise entre 12 et 15˚.

Ce réseau a été recouvert d'un revêtement de 20 paires de couches alternées d'épaisseur identique de Mo et Si, chaque couche ayant sensiblement une épaisseur de 3,9 nm, formant un réseau de diffraction comprenant un réseau épais 9 et un réseau mince de surface 10 ayant une amplitude au plus de d/2. Le réseau de diffraction ainsi formé comprend un premier empilement périodique 5 de couches minces de période d = 7,8 nm formant des traits 11 parallèles entre eux, de largeur $l_1$ =125 nm, séparés de 292 nm, espacés périodiquement avec une période p =417 nm et un deuxième empilement 6 périodique de couches minces de même période d formant des traits 11, parallèles entre eux, de largeur $l_2$ = 292 nm séparés de 125 nm, espacés périodiquement avec une même période p, ledit deuxième empilement 6 étant intercalé avec le premier empilement 5 et déphasé selon la direction perpendiculaire au substrat 2 de la profondeur de gravure h=d/2.

Le réseau de diffraction ainsi réalisé ne reproduit pas exactement la géométrie idéale attendue. Le rapport cyclique dans la direction parallèle au substrat 2 est en effet éloigné de sa valeur souhaitable qui est proche de 0,5. Ce rapport est ici égal au rapport cyclique $l_2/p$ du réseau formant le substrat 2 soit $l_2/p$ = 0,70 ± 0,01. En revanche l'accord de la période verticale avec la valeur mesurée de la profondeur de gravure h, est excellent

La figure 6 donne le résultat de simulations numériques de l'efficacité de ce réseau de rapport cyclique 0,70 à une longueur d'onde de 1 nm, soit 1240 eV, pour deux types de revêtements réfléchissants : un traitement en couche mince classique de platine et le revêtement multicouche Mo/Si de 3,8 nm d'épaisseur par couche, adapté à la valeur de h mesurée. On a tracé indépendamment l'efficacité de diffraction dans trois directions correspondant aux ordres de diffraction (-1, 0, +1) du réseau de période *p*. L'axe des abscisses 14 représente l'angle d'incidence en degrés et l'axe des ordonnées 15 représente l'efficacité de diffraction. L'efficacité du réseau recouvert d'une couche de platine présente une réflectivité importante dans l'ordre 0 (courbe en trait plein 16) pour les angles inférieurs à 3 degrés. Les efficacités des ordres -1 (courbe trait interrompu 17) et +1 (courbe en points et tirets 18) ont des courbes de variation larges avec un maximum à 4% pour une incidence rasante de 1,95 degrés et 4,45 degrés, respectivement.

Le deuxième jeu de courbes correspond à un réseau recouvert de couches alternées de Mo et Si d'épaisseur identique égale à 3,8 nm. L'ordre 0 (courbe en trait fin avec des cercles 19) présente toujours une réflectivité importante pour les incidences très rasantes, mais la coupure se produit à un angle plus faible. Il existe aussi un pic aigu de réflectivité à l'angle de Bragg q=0, r=1 du multicouche soit 4,27 degrés. Les efficacités des ordres q=1 (courbe en trait fin avec des triangles pointe en bas 20) et q=+1 (courbe en trait plein avec des triangles pointe en haut 21) présentent chacune un maximum aigu à 15% de part et d'autre du pic d'ordre 0 avec un écart angulaire de 0,92 degrés égal à l'angle d'asymétrie B. On notera sur ces deux courbes 20, 21 la persistance d'un maximum secondaire 22, 23 très atténué aux positions des pics du réseau de surface qui correspondent aux ordres (r=0, q=±1). Enfin, on notera la présence de deux minima relatifs dans l'ordre 0, en correspondance avec les maxima des ordres q=±1, qui confirme l'existence d'un couplage préférentiel de l'énergie vers les ordres blazés, i.e. les ordres autorisés.

La figure 7 montre les résultats de mesures obtenues pour une radiation incidente de longueur d'onde 1nm.

Le dispositif de mesure utilisé est un goniomètre à deux axes, l'un portant le réseau de diffraction et le second le détecteur. Le réseau est éclairé par un pinceau de lumière parallèle, et pour isoler les ordres diffractés, on a limité l'étendue du détecteur par un petit trou. Cette figure 7 représente l'efficacité de diffraction du réseau en fonction de l'angle d'incidence rasante de la radiation incidente. L'axe des abscisses 14 représente l'angle d'incidence en degrés et l'axe des ordonnées 15 représente l'efficacité de diffraction. La première courbe 24 (en trait interrompu) représente les résultats obtenus pour l'ordre q=1, la deuxième courbe 25 (en trait fort), l'ordre q=0 et la troisième courbe 26 (en points et tirets), l'ordre q=+ 1. L'aspect des courbes de la figure 6 n'est pas reproduit exactement pour plusieurs raisons. D'abord la réponse est élargie par la réponse angulaire du système de mesure, qui est proportionnelle à la convolution de la dimension du trou par la largeur du faisceau incident. Ensuite l'intensité mesurée au sommet des pics est plus faible, 9% au lieu de 15%, ce qui peut provenir d'un profil légèrement trapézoïdal alors que la simulation supposait un profil rectangulaire, mais leur position en angle d'incidence rasante est exacte et coïncide avec celle de la simulation.

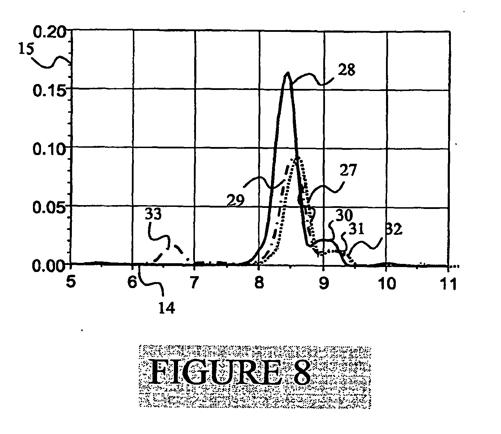

La figure 8 montre trois courbes d'efficacité de ce même réseau, obtenues en maintenant fixe l'incidence du rayonnement et en faisant varier la position angulaire du détecteur. Les angles sont repérés à partir de la direction du faisceau incident, angle de déviation D. L'axe des abscisses 14 représente donc l'angle de déviation en degrés et l'axe des ordonnées 15 représente l'efficacité de diffraction. La première courbe 27 (en pointillé fin) représente les résultats obtenus pour l'ordre - 1, la deuxième courbe 28 (en trait plein), l'ordre 0 et la troisième courbe 29 (en points et tirets), l'ordre + 1. Les trois courbes 27-29 correspondent aux valeurs de l'incidence pour laquelle l'efficacité est maximale, dans l'ordre -1 à 3,35 degrés, dans l'ordre 0 à 4,25 degrés et dans l'ordre +1 à 5,2 degrés. Les pics d'efficacité à 8,55 degrés ne sont pas symétriques mais présentent un épaulement 30-32 du côté des grands angles. Cet effet n'est pas lié au réseau mais à la géométrie du faisceau incident et du trou de mesure, et se retrouve sur les mesures de calibration faites sans le réseau. Sur les mesures faites pour la troisième courbe 29, i.e. l'ordre + 1, à une incidence de 3,35 degrés, il existe un pic secondaire 33 à 6,7 degrés qui correspond à l'ordre 0 du réseau. Celui ci est très atténué mais n'est pas totalement annulé parce que le rapport cyclique du réseau de base est 0,7 au lieu de sa valeur souhaitable qui est de 0,5. Un faible pic d'ordre 0 est aussi visible à 10,4 degrés sur la mesure réalisée à 5,2 degrés pour la troisième courbe, i.e. l'ordre +1. On remarque aussi que les trois pics à 8,55 degrés ne sont pas aussi exactement superposés que le prévoient la théorie et la simulation. Cela peut être dû à des erreurs d'alignement et de calibration du goniomètre de mesure.

## EXEMPLE 2

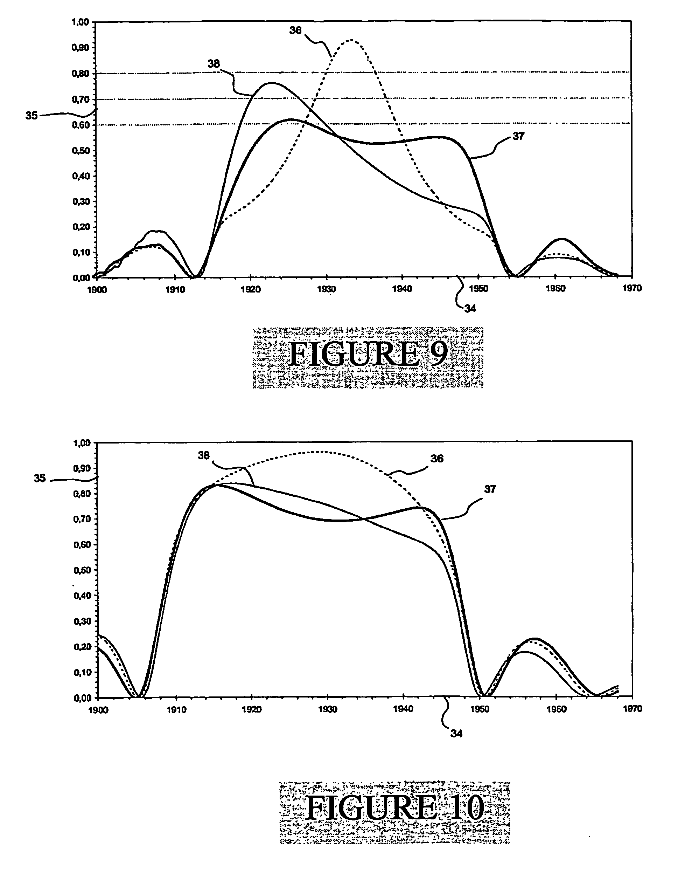

Les figures 9-12 décrivent un deuxième mode de mise en oeuvre d'un réseau de diffraction pour un fonctionnement à une longueur d'onde de 193 nm. Ce réseau de diffraction comprend un substrat 2. Ce substrat 2 est un réseau ayant un relief de surface formé sur une surface plane 3. Ledit relief comprend des traits 11 parallèles entre eux ayant un profil lamellaire de profondeur h = 40 nm. La densité de traits 11 est de 3245,9 traits/mm, soit une période p = 308 nm. Le rapport creux/période de ce réseau est de 0,50, c'est à dire que la partie haute des traits 11 a une largeur $l_1$= 154 nm et la partie basse une largeur $l_2$=154 nm. Les traits 11 ont une forme rectangulaire.

Ce réseau a été recouvert d'un revêtement de 60 paires de couches alternées d'épaisseur identique de $MgF_2$ et $LaF_3$, chaque couche ayant sensiblement une épaisseur de 40 nm. Le réseau de diffraction ainsi formé comprend deux empilements périodiques 5 et 6 de couches minces de période d = 80 nm formant des traits 11 parallèles entre eux, de largeur $l_1$= 154 nm, séparés de 154 nm, espacés périodiquement avec une période p = 308 nm. Ces deux empilements étant intercalé entre eux et déphasé selon la direction perpendiculaire au substrat 2 de la profondeur de gravure h=d/2.

Le réseau de diffraction ainsi réalisé reproduit exactement la géométrie idéale attendue pour un fonctionnement en configuration de Littrow dans l'ordre de diffraction q = -3 pour un faisceau lumineux de longueur d'onde 193 nm.

L'angle d'incidence du faisceau lumineux est égal à 70˚. " L'angle d'incidence " est défini ici comme l'angle avec lequel le faisceau lumineux tombe sur la surface du réseau par rapport à la normale à cette surface. Ainsi, un faisceau lumineux ayant une incidence normale à la surface du réseau a un angle d'incidence de zéro degré.

Les figures 9 et 10 donnent respectivement le résultat de simulations numériques de l'efficacité de ce réseau, sur un domaine spectral allant de 190 nm à 197 nm pour les composantes de polarisation linéaire TE (transverse electric) et TM (transverse magnetic). Une première courbe (courbe 36 trait interrompu) a été obtenue pour un tel réseau ne comprenant pas de réseau de surface mince 10, tel que décrit dans un second mode de réalisation du réseau de l'invention à la figure 3. Une deuxième courbe (courbe 37 en trait épais) a été obtenue pour un tel réseau comprenant un réseau mince de surface 10, tel que décrit dans un premier mode de réalisation du réseau de la figure 2. Ce réseau mince de surface comprend des traits en $MgF_2$. Une troisième courbe (courbe 38 en trait fin) a été obtenue pour un tel réseau comprenant un réseau mince de surface 10 tel que décrit dans un premier mode de réalisation du réseau de la figure 2. Ce réseau mince de surface comprend des traits en $LaF_3$.

L'axe des abscisses 34 représente les longueurs d'onde en Angstrom et l'axe des ordonnées 35 représente l'efficacité de diffraction correspondant a l'ordre de diffraction -3 du réseau de période p. La première courbe 36 présente une réflectivité très importante (supérieure à 90%) au voisinage de 193 nm pour les deux polarisations TE et TM. Les efficacités obtenues pour la deuxième courbe 37 sont légèrement inférieures. Les efficacités en polarisation TM présentent une largeur spectrale de 3,5 nm, supérieure à celle obtenue en polarisation TE.

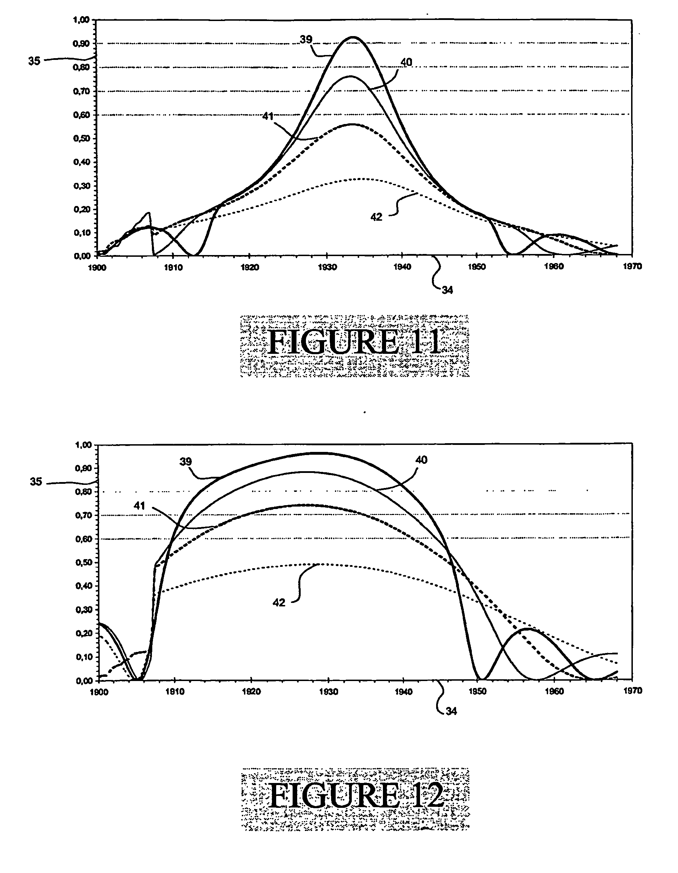

Les figures 11 et 12 montrent le résultat de simulations numériques de l'efficacité de ce réseau sur un domaine spectral allant de 190 nm à 197 nm dans l'ordre -3 de diffraction du réseau respectivement pour les composantes de polarisation linéaire TE (transverse electric) et TM (transverse magnetic). Quatre courbes 39-42 montrent respectivement l'efficacité de diffraction du réseau en fonction de la longueur d'onde du faisceau incident pour des nombres de paires de couches alternées différents: 60 (courbe 39 en trait plein épais), 40 (courbe 40 en trait plein fin), 30 (courbe 41 en trait interrompu épais) et 20 (courbe 42 en trait interrompu fin). L'axe des abscisses 34 représente les longueurs d'onde en Angstrom et l'axe des ordonnées 35 représente l'efficacité de diffraction.

L'efficacité de diffraction du réseau est d'autant plus élevée que le nombre de périodes de l'empilement du revêtement multicouche est grand quelque soit la polarisation de l'onde incidente. Un minimum de 30 paires de couches est nécessaire pour dépasser 50% d'efficacité, et l'on considère qu'au-delà de 60 paires de couches le maximum d'efficacité est atteint pour ce mode de mise en oeuvre.

**EXEMPLE 3**

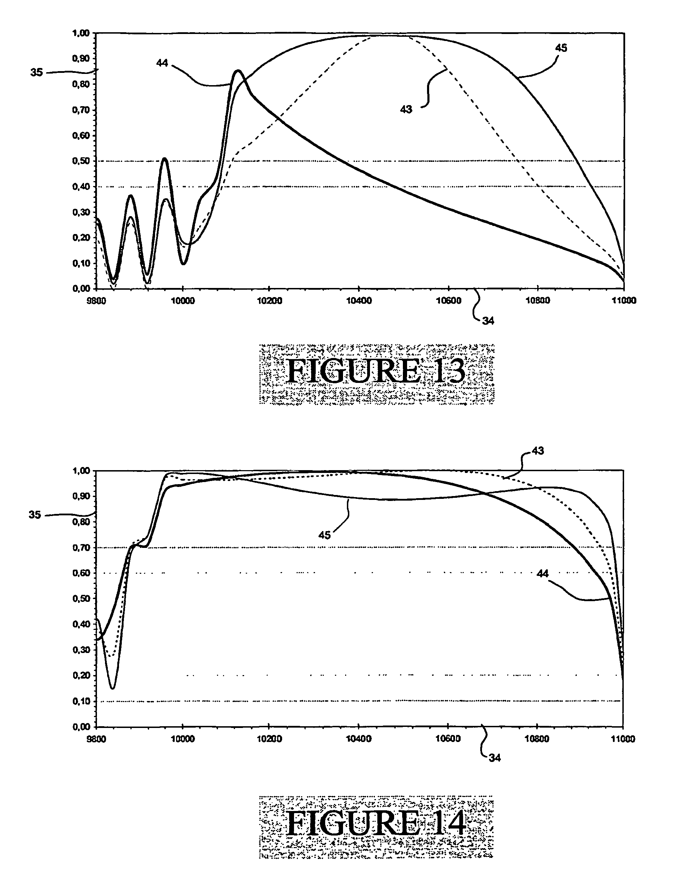

Les figures 13-15 décrivent un troisième mode de mise en oeuvre d'un réseau de diffraction pour un fonctionnement à une longueur d'onde de 1054 nm. Ce réseau de diffraction comprend un substrat 2. Ce substrat 2 est un réseau ayant un relief de surface formé sur une surface plane 3. Ledit relief comprend des traits 11 parallèles entre eux ayant un profil lamellaire de profondeur h = 195 nm. La densité de traits 11 est de 1740 traits/mm, soit une période p = 575 nm. Le rapport creux/période de ce réseau est de 0,50, c'est à dire que la partie haute des traits 11 a une largeur $l_1$ = 287,5 nm et la partie basse une largeur $l_2$= 287,5 nm. Les traits 11 ont une forme rectangulaire.

Ce réseau a été recouvert d'un revêtement de 60 paires de couches alternées d'épaisseur identique de $HfO_2$ et $SiO_2$, chaque couche ayant sensiblement une épaisseur de 195 nm. Le réseau de diffraction ainsi formé comprend deux empilements périodiques 5 et 6 de couches minces de période d = 390 nm formant des traits 11 parallèles entre eux, de largeur $l_1$= 287,5 nm, séparés de 287,5 nm, espacés périodiquement avec une période p = 575 nm. Ces deux empilements étant intercalés entre eux et déphasés selon la direction perpendiculaire au substrat 2 de la profondeur de gravure h=d/2.

Le réseau de diffraction ainsi réalisé reproduit exactement la géométrie idéale attendue pour une configuration proche de Littrow dans l'ordre de diffraction q = -1 pour un faisceau lumineux de longueur d'onde 1054 nm. L'angle d'incidence du faisceau lumineux est égal à 66˚ (par rapport à la normale au réseau).

Les figures 13 et 14 montrent le résultat de simulations numériques de l'efficacité de ce réseau, sur un domaine spectral allant de 980 nm à 1100 nm en polarisation TE (figure 13) et en polarisation TM (figure 14). Une première courbe (courbe 43 trait interrompu) a. été obtenue pour un tel réseau ne comprenant pas de réseau mince de surface 10, tel que décrit dans un second mode de réalisation du réseau de l'invention à la figure 3. Une deuxième courbe (courbe 44 en trait plein épais) a été obtenue pour un tel réseau comprenant un réseau mince de surface 10, tel que décrit dans un premier mode de réalisation du réseau de la figure 2. Ce réseau mince de surface 10 comprend des traits en $HfO_2$. Une troisième courbe (courbe 45 en trait plein fin) a été obtenue pour un tel réseau comprenant un réseau mince de surface 10, tel que décrit dans un premier mode de réalisation du réseau de la figure 2. Ce réseau mince de surface comprend des traits en $SiO_2$.

L'axe des abscisses 34 représente les longueurs d'onde en Angstrom et l'axe des ordonnées 35 représente l'efficacité de diffraction correspondant à l'ordre de diffraction -1 du réseau de période p.

La première courbe 43 présente des efficacités de diffraction très importantes (supérieure à 95%) pour la composante linéaire en polarisation TM, au voisinage de 1054 nm et sur une bande spectrale large (de 1010 nm à 1070 nm). Les efficacités en polarisation TM pour les trois courbes 40-42 sont supérieures à 88% sur un large domaine spectral au tour de la longueur d'onde 1054 nm. Les profils d'efficacité en polarisation TM présentent une largeur spectrale supérieure à celle obtenue en polarisation TE. La troisième courbe 45 présente en polarisation TE une largeur spectrale supérieure à celle de la première courbe 43.

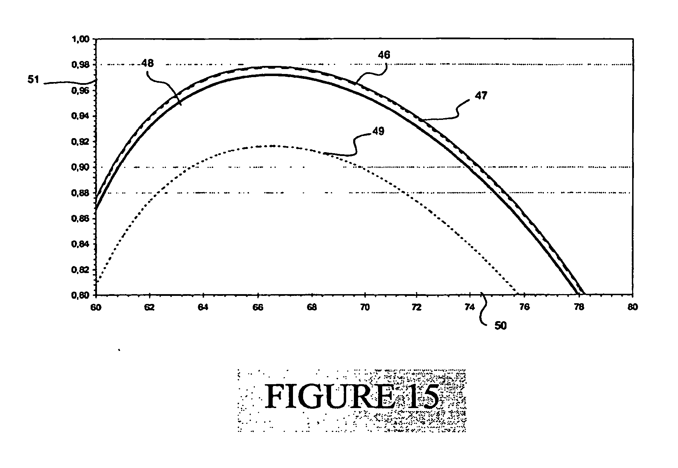

La figure 15 donne le résultat de simulations numériques de l'efficacité de diffraction en polarisation TE du réseau ne comprenant pas de réseau mince de surface 10 pour un angle d'incidence variant entre 60˚ et 80˚, et pour un nombre de paires de couches alternées variable: 60 (courbe 46 en trait plein fin), 20 (courbe 47 en trait interrompu épais), 15 (courbe 48 en trait plein épais) et 10 (courbe 49 en trait interrompu fin). L'axe des abscisses 50 représente l'angle d'incidence du faisceau incident de longueur d'onde 1054 nm et l'axe des ordonnées 51 représente l'efficacité de diffraction pour l'ordre de diffraction -1.

L'efficacité de diffraction du réseau est d'autant plus élevée que le nombre de périodes de l'empilement du réseau épais 9 est grand. Un minimum de 20 paires de couches est nécessaire pour atteindre le maximum d'efficacité permise par ce mode de réalisation (98%), et 15 paires de couches suffisent pour approcher 99% de ce maximum (97%). L'efficacité du réseau est maximum pour un fonctionnement en configuration de Littrow.

## EXEMPLE 4

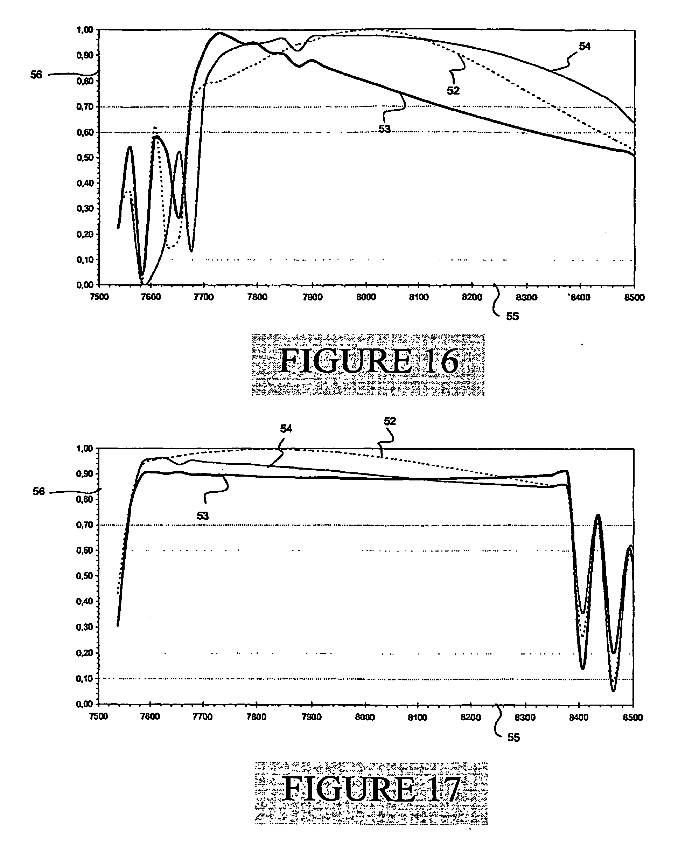

Les figures 16-17 décrivent un quatrième mode de mise en oeuvre du réseau de diffraction pour un fonctionnement à une longueur d'onde de 800 nm. Ce réseau de diffraction comprend un substrat 2. Ce substrat 2 est un réseau ayant un relief de surface formé sur une surface plane 3. Ledit relief comprend des traits 11 parallèles entre eux ayant un profil lamellaire de profondeur h = 129,25 nm. La densité de traits 11 est de 1480 traits/mm, soit une période p = 676 nm. Le rapport creux/période de ce réseau est de 0,50, c'est à dire que la partie haute des traits 11 a une largeur $l_1$= 338 nm et la partie basse une largeur $l_2$=338 nm. Les traits 11 ont une forme rectangulaire.

Ce réseau a été recouvert d'un revêtement de 60 paires de couches alternées d'épaisseur identique de $HfO_2$ et $SiO_2$, chaque couche ayant sensiblement une épaisseur de 129,25 nm. Le réseau de diffraction ainsi formé comprend deux empilements périodiques 5 et 6 de couches minces de période d = 258,5 nm formant des traits 11 parallèles entre eux, de largeur $l_1$= 338 nm, séparés de 338 nm, espacés périodiquement avec une période p = 676 nm. Ces deux empilements étant intercalé entre eux et déphasé selon la direction perpendiculaire au substrat 2 de la profondeur de gravure h=d/2.

Le réseau de diffraction ainsi réalisé reproduit exactement la géométrie idéale attendue pour un fonctionnement en configuration proche de Littrow dans l'ordre de diffraction q = -1 pour un faisceau lumineux de longueur d'onde 800 nm.

L'angle d'incidence du faisceau lumineux sur ce réseau est égal à 41,5˚ (par rapport à la normale au réseau).

Les figures 16 et 17 montrent le résultat de simulations numériques de l'efficacité de ce réseau, sur un domaine spectral allant de 750 nm à 850 nm en polarisation TE (figure 16) et en polarisation TM (figure 17). Une première courbe (courbe 52 trait interrompu) a été obtenue pour un tel réseau ne comprenant pas de réseau mince de surface 10, tel que décrit dans un second mode de réalisation du réseau de l'invention à la figure 3. Une deuxième courbe (courbe 53 en trait plein épais) a été obtenue pour un tel réseau comprenant un un réseau mince de surface 10, tel que décrit dans un premier mode de réalisation du réseau de la figure 2. Ce réseau mince de surface comprend des traits en $HfO_2$. Une troisième courbe (courbe 54 en trait plein fin) a été obtenue pour un tel réseau comprenant un réseau mince de surface 10, tel que décrit dans un premier mode de réalisation du réseau de la figure 2. Ce réseau mince de surface 10 comprend des traits en $SiO_2$.

L'axe des abscisses 55 représente les longueurs d'onde en Angstrom et l'axe des ordonnées 56 représente l'efficacité de diffraction correspondant à l'ordre de diffraction -1 du réseau de période p.

Les efficacités du réseau correspondant à la première courbe 52 présentent des valeurs très importantes (supérieures à 95%) au voisinage de 800 nm pour les deux polarisations TE et TM sur une bande spectrale large. Les efficacités en polarisation TM pour les trois courbes 52-54 sont supérieures à 88% sur un large domaine spectrale au tour de la longueur d'onde 1054 nm. Les courbes d'efficacité en polarisation TM présentent une largeur spectrale supérieure à celle obtenue en polarisation TE. La troisième courbe 54 présente en polarisation TE une largeur spectrale supérieure à celle de la première courbe 52.

Le comportement de ce quatrième mode de mise en oeuvre est très similaire à celui de l'exemple 3.

## EXEMPLE 5

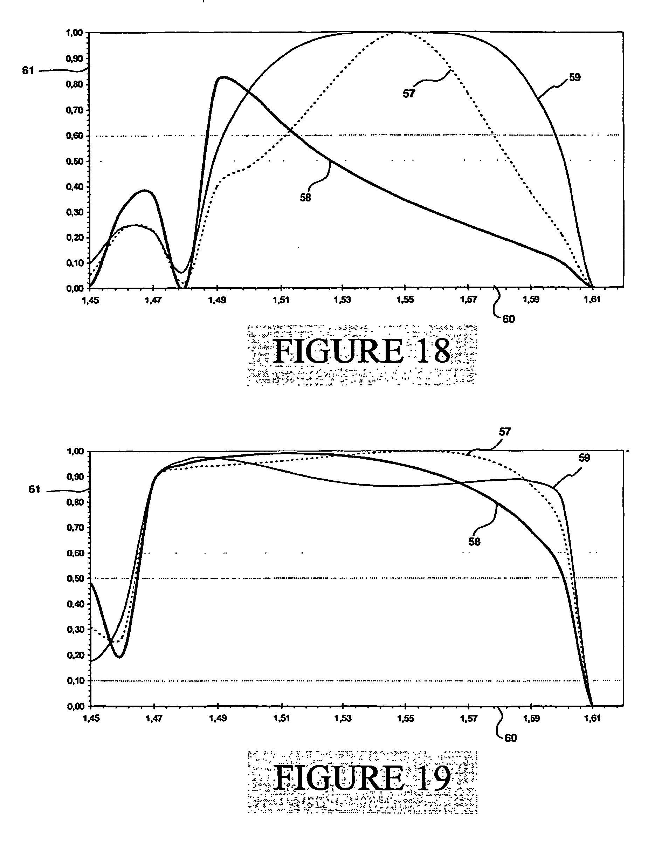

Les figures 18-21 décrivent un cinquième mode de mise en oeuvre d'un réseau de diffraction pour un fonctionnement à une longueur d'onde de 1550 nm. Ce réseau de diffraction comprend un substrat 2. Ce substrat 2 est un réseau ayant un relief de surface formé sur une surface plane 3. Ledit relief comprend des traits 11 parallèles entre eux ayant un profil lamellaire de profondeur h = 286,35 nm. La densité de traits 11 est de 1200 traits/mm, soit une période p = 833 nm. Le rapport creux/période de ce réseau est de 0,50, c'est à dire que la partie haute des traits 11 a une largeur $l_1$= 416,6 nm et la partie basse une largeur $l_2$=416,6 nm. Les traits 11 ont une forme rectangulaire.

Ce réseau a été recouvert d'un revêtement de 20 paires de couches alternées d'épaisseur identique de $HfO_2$ et $SiO_2$, chaque couche ayant sensiblement une épaisseur de 286,35 nm. Le réseau de diffraction ainsi formé comprend deux empilements périodiques 5 et 6 de couches minces de période d = 572,7 nm formant des traits 11 parallèles entre eux, de largeur $l_1$= 416,6 nm, séparés de 416,6 nm, espacés périodiquement avec une période p = 833 nm. Ces deux empilements étant intercalés entre eux et déphasés selon la direction perpendiculaire au substrat 2 de la profondeur de gravure h=d/2.

Le réseau de diffraction ainsi réalisé reproduit exactement la géométrie idéale attendue pour un fonctionnement en configuration proche de Littrow dans l'ordre de diffraction q = -1 pour un faisceau lumineux de longueur d'onde 1550 nm.

L'angle d'incidence du faisceau lumineux sur ce réseau est égal à 68,44˚ (par rapport à la normale au réseau).

Les figures 18 et 19 donnent le résultat de simulations numériques de l'efficacité de ce réseau, sur un domaine spectral allant de 1450 nm à 1620 nm en polarisation TE (figure 18) et en polarisation TM (figure 19). Une première courbe (courbe 57 trait interrompu) a été obtenue pour un tel réseau ne comprenant pas un réseau mince de surface 10, tel que décrit dans un second mode de réalisation du réseau de l'invention à la figure 3. Une deuxième courbe (courbe 58 en trait plein épais) a été obtenue pour un tel réseau présentant un réseau mince de surface 10, tel que décrit dans un premier mode de réalisation du réseau de la figure 2. Ce réseau mince de surface 10 comprend des traits en $HfO_2$. Une troisième courbe (courbe 59 en trait plein fin) a été obtenue pour un tel réseau présentant un réseau mince de surface 10, tel que décrit dans un premier mode de réalisation du réseau de la figure 2. Ce réseau mince de surface 10 comprend des traits en $SiO_2$.

L'axe des abscisses 60 représente les longueurs d'onde en microns et l'axe des ordonnées 61 représente l'efficacité de diffraction correspondant à l'ordre de diffraction -1 du réseau de période p.

Les efficacités du réseau correspondant à la première courbe 57 présente des valeurs très importantes (supérieures à 90%) au voisinage de 1550 nm pour la polarisation TM sur une bande spectrale large (de 1470 nm à 1580 nm). Les efficacités en polarisation TM des trois courbes 57-59 sont supérieures à 85% sur un large domaine spectral autour de la longueur d'onde 1550 nm. Les courbes d'efficacité en polarisation TM présentent une largeur spectrale supérieure à celle obtenue en polarisation TE. La troisième courbe 59 en polarisation TE présente une largeur spectrale supérieure à celle de la première courbe 57.

Le mode de réalisation particulier du réseau conduisant à la troisième courbe permet d'envisager un fonctionnement à faible taux de polarisation et forte efficacité sur un large domaine spectral.

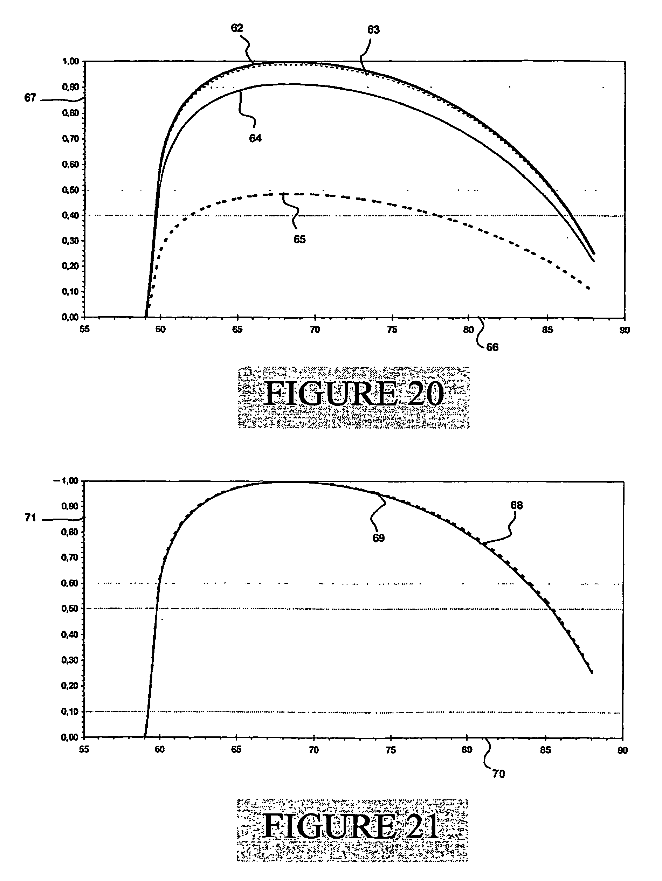

La figure 20 donne le résultat de simulations numériques de l'efficacité du réseau ne comprenant pas de réseau mince de surface 10 pour un angle d'incidence variant entre 55˚ et 88˚, et pour un nombre de paires de couches alternées variable: 20 (courbe 62 en trait plein épais), 15 (courbe 63 en trait interrompu fin), 10 (courbe 64 en trait plein fin) et 5 (courbe 65 en trait interrompu épais). L'axe des abscisses 66 représente l'angle d'incidence (défini tel qu'il soit égal à 0˚ lorsque l'incidence est normale au réseau) et l'axe des ordonnées 67 représente l'efficacité de diffraction.

L'efficacité du réseau est d'autant plus élevée que le nombre de périodes de l'empilement du revêtement multicouche est grand. Un minimum de 15 à 20 paires de couches est nécessaire pour atteindre le maximum d'efficacité permise par ce mode de réalisation (99%).

La figure 21 permet de comparer les résultats de simulations numériques de l'efficacité du réseau de la figure 20 pour la même gamme d'angle d'incidence pour les polarisations linéaires TE (courbe 68 en trait plein) et TM (courbe 69 en trait interrompu) à la longueur d'onde de 1550 nm. L'axe des abscisses 70 représente l'angle d'incidence (défini tel qu'il soit égal à 0˚ lorsque l'incidence est normale au réseau) et l'axe des ordonnées 71 représente l'efficacité de diffraction. Ce mode de réalisation permet d'envisager un fonctionnement à faible taux de polarisation à tout angle d'incidence. L'efficacité reste optimale pour un fonctionnement en configuration de Littrow.

## EXEMPLE 6

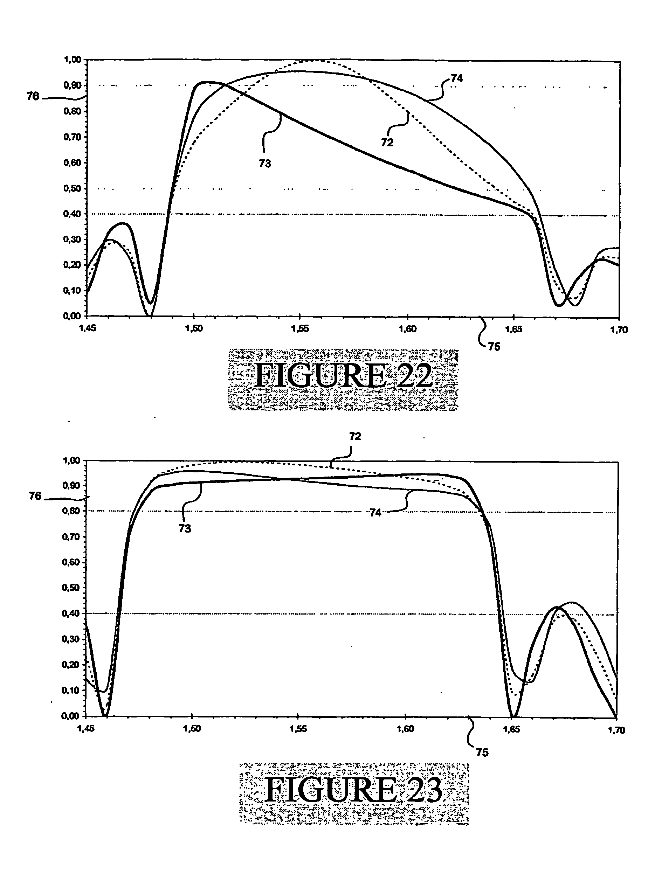

Les figures 22-24 décrivent un sixième mode de mise en oeuvre d'un réseau de diffraction pour un fonctionnement à une longueur d'onde de 1550 nm. Ce réseau de diffraction comprend un substrat 2. Ce substrat 2 est un réseau ayant un relief de surface formé sur une surface plane 3. Ledit relief comprend des traits 11 parallèles entre eux ayant un profil lamellaire de profondeur h = 260,7 nm. La densité de traits 11 est de 900 traits/mm, soit une période p = 1111 nm. Le rapport creux/période de ce réseau est de 0,50, c'est à dire que la partie haute des traits 11 a une largeur $l_1$ = 555,5 nm et la partie basse une largeur $l_2$=555,5 nm. Les traits 11 ont une forme rectangulaire.

Ce réseau a été recouvert d'un revêtement de 20 paires de couches alternées d'épaisseur identique de $HfO_2$ et $SiO_2$, chaque couche ayant sensiblement une épaisseur de 260,7 nm. Le réseau de diffraction ainsi formé comprend deux empilements périodiques 5 et 6 de couches minces de période d = 521,4 nm formant des traits 11 parallèles entre eux, de largeur $l_1$ = 555,5 nm, séparés de 555,5 nm, espacés périodiquement avec une période p = 1111 nm. Ces deux empilements étant intercalés entre eux et déphasés selon la direction perpendiculaire au substrat 2 de la profondeur de gravure h=d/2.

Le réseau de diffraction ainsi réalisé reproduit exactement la géométrie idéale attendue pour un fonctionnement en configuration proche de Littrow dans l'ordre de diffraction q = -1 pour un faisceau lumineux de longueur d'onde 1550 nm.

L'angle d'incidence du faisceau lumineux sur ce réseau est égal à 44,23˚ (par rapport à la normale au réseau).

Les figures 22 et 23 donnent le résultat de simulations numériques de l'efficacité de ce réseau, sur un domaine spectral allant de 1450 nm à 1700 nm en polarisation TE (figure 22) et en polarisation TM (figure 23). Une première courbe (courbe 72 trait interrompu) a été obtenue pour un tel réseau ne comprenant pas de réseau mince de surface 10, tel que décrit dans un second mode de réalisation du réseau de l'invention à la figure 3. Une deuxième courbe (courbe 73 en trait plein épais) a été obtenue pour un tel réseau présentant un réseau mince de surface 10, tel que décrit dans un premier mode de réalisation du réseau de la figure 2. Ce réseau mince de surface 10 comprend des traits en $HfO_2$. Une troisième courbe (courbe 74 en trait plein fin) a été obtenue pour un tel réseau présentant un réseau mince de surface 10, tel que décrit dans un premier mode de réalisation du réseau de la figure 2. Ce réseau mince de surface 10 comprend des traits en $SiO_2$.

L'axe des abscisses 75 représente les longueurs d'onde en microns et l'axe des ordonnées 76 représente l'efficacité de diffraction correspondant à l'ordre de diffraction -1 du réseau de période p.

Les efficacités du réseau correspondant à la première courbe 72 présente des valeurs très importantes (supérieures à 90%) au voisinage de 1550 nm pour la polarisation TM sur une bande spectrale large (de 1480 nm à 1620 nm). Les efficacités en polarisation TM du réseau pour les trois courbes 72-74 sont supérieures à 85% sur un large domaine spectral autours de la longueur d'onde 1550 nm. Les efficacités en polarisation TM présentent une largeur spectrale supérieure à celle obtenue en polarisation TE. La troisième courbe 74 présente en polarisation TE une largeur spectrale supérieure à celle de la première courbe 72.

Le mode de réalisation particulier du réseau conduisant à la troisième courbe 74 permet d'envisager un fonctionnement à faible taux de polarisation et forte efficacité sur un large domaine spectral, ce domaine étant encore plus étendu que celui de l'exemple 5.

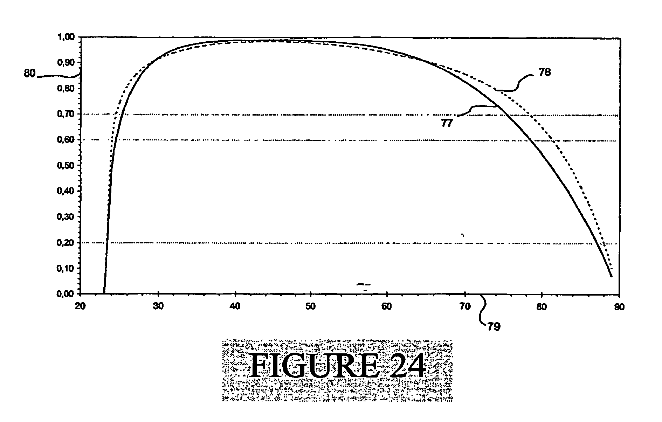

La figure 24 permet de comparer les résultats de simulations numériques de l'efficacité du réseau ne comprenant pas de réseau mince de surface 10 pour un angle d'incidence variant entre 20˚ et 88˚, pour les polarisations linéaires TE (courbe 77 en trait plein) et TM (courbe 78 en trait interrompu) à la longueur d'onde de 1550 nm. L'axe des abscisses 79 représente l'angle d'incidence (défini tel qu'il soit égal à 0˚ lorsque l'incidence est normale au réseau) et l'axe des ordonnées 80 représente l'efficacité de diffraction. Ce mode de réalisation permet d'envisager un fonctionnement à faible taux de polarisation à tout angle d'incidence. L'efficacité reste optimale pour un fonctionnement en configuration de Littrow.

Les exemples confirment que l'invention trouve des applications dans un domaine spectral étendu des rayons X à l'infrarouge.

## Revendications

1. Réseau bidimensionnel de diffraction en réflexion destiné à être utilisé sous un angle $\alpha$ d'incidence rasante pour la dispersion de flux lumineux polychromatique ou quasi-monochromatique dans un domaine spectral étendu des rayons X à l'infrarouge, ledit réseau comportant:

   - un substrat (2) ayant une surface (3),
   - un premier (5) et un deuxième (6) empilements de couches minces bipériodiques de période d dans le sens de l'épaisseur, comportant au moins dix périodes, chaque période d étant constituée de couches d'au moins deux matériaux (7,8) différents, lesdits empilements (5,6) formant des traits contigus (11) de largeur p/2, parallèles entre eux, et répétés périodiquement dans une direction parallèle à la surface du substrat (2) avec une période p, le deuxième empilement (6) étant alterné avec le premier empilement (5) et lesdits empilements (5) et (6) étant décalés en épaisseur de d/2 dans la direction de périodicité perpendiculaire à la surface (3) du substrat (2), de sorte que les empilements (5 et 6) constituent un réseau épais (9) porté par le substrat (2),

   - ledit réseau épais (9) étant formé de la répétition doublement périodique d'une même maille élémentaire, ladite maille élémentaire comprenant une période du premier empilement (5) et une période contigue du deuxième empilement (6) et
   - **caractérisé en ce que** la surface externe du réseau bidimensionnel (9) ne présente pas de réseau de surface mais un relief de surface d'amplitude nulle.

2. Réseau bidimensionnel de diffraction selon la revendication 1, **caractérisé en ce que** le premier (5) et le deuxième (6) empilements de couches minces du réseau épais comportent au moins trente périodes et au plus une soixantaine de périodes d'épaisseur d suivant une direction perpendiculaire à la surface (3) du substrat (2).

3. Réseau bidimensionnel de diffraction selon l'une quelconque des revendications 1 à 2, **caractérisé en ce que** le substrat (2) a une surface (3) supérieure plane.

4. Réseau bidimensionnel de diffraction selon l'une quelconque des revendications 1 à 3, **caractérisé en ce que** le substrat (2) a une surface (3) supérieure concave, convexe, sphérique ou asphérique.

5. Réseau bidimensionnel de diffraction selon l'une quelconque des revendications 1 à 4, **caractérisé en ce qu'**il comporte une couche de protection déposée sur lesdits premier et deuxième empilements (5,6) de couches.

6. Réseau bidimensionnel de diffraction selon une au moins des revendications 1 à 5 **caractérisé en ce qu'**il comporte une couche d'accrochage entre le substrat (2) et la première couche de chaque empilement (5,6).

**7.** Réseau bidimensionnel de diffraction selon l'une quelconque des revendications 1 à 6, **caractérisé en ce qu'**il comporte une couche de blocage entre matériaux successifs (7,8).

**8.** Réseau bidimensionnel de diffraction selon l'une quelconque des revendications 1 à 7, **caractérisé en ce que** la répartition des indices des matériaux (7,8) formant une maille élémentaire présente des symétries ou antisymétries de telle sorte que lors de son utilisation au moins un ordre de diffraction est affaibli ou renforcé.

**9.** Réseau bidimensionnel de diffraction selon la revendication 8, **caractérisé en ce que** la répartition des indices des matériaux (7,8) formant la maille élémentaire présente une symétrie par rapport au centre de ladite maille élémentaire.

**10.** Réseau bidimensionnel de diffraction selon la revendication 8 ou 9, **caractérisé en ce que** la maille élémentaire est formée de deux matériaux (7,8) ayant des indices optiques différents.

**11.** Réseau bidimensionnel de diffraction selon l'une quelconque des revendications 1 à 10 **caractérisé en ce que** la le pas p du réseau et l'épaisseur d des couches minces des empilements (5,6) varient continûment selon la position à la surface (12) du réseau de telle sorte que le rapport d/p reste en tout point constant.

**12.** Dispositif spectroscopique pour l'analyse ou le filtrage d'une source lumineuse comportant au moins un réseau bidimensionnel de diffraction **caractérisé en ce que** ledit réseau est un réseau de diffraction selon l'une quelconque des revendications 1 à 11.

**13.** Dispositif spectroscopique selon la revendication 12, destiné à recevoir un faisceau lumineux comportant au moins une radiation centrée sur une longueur d'onde $\lambda_0$ émise par une source lumineuse, la radiation diffractée de longueur d'onde $\lambda_0$ par ledit réseau formant un angle de déviation D avec le faisceau incident, **caractérisé en ce que**

- le réseau bidimensionnel de diffraction est orienté de façon telle que la normale au réseau fasse un angle B constant à + 10% avec la bissectrice à l'angle de déviation D, où l'angle d'asymétrie B est l'angle d'inclinaison du réseau par rapport à la bissectrice des directions d'incidence et d'émergence,
- l'angle D et la longueur d'onde $\lambda_0$ de ladite radiation vérifiant l'équation suivante :

$$2\sin(D/2) \times \sin B = q\lambda_0/p$$

où p est la période du réseau dans le plan de sa surface, q est l'ordre de diffraction dans cette direction.

**14.** Dispositif spectroscopique selon la revendication 13, **caractérisé en ce que** l'angle B est défini par la relation

$$\tan B = qd/rp\ (1 - (1-n)/((r\lambda_0/2d)^2 - (qd/rp)^2))$$

où d est la période du réseau selon l'axe perpendiculaire à la surface du réseau et r l'ordre de diffraction dans cette direction et n l'indice moyen du réseau.

**15.** Dispositif spectroscopique selon les revendications 13 et 14, **caractérisé en ce qu'**il comprend un dispositif dispersif comportant ledit réseau bidimensionnel de diffraction et un miroir placé avant ou après celui-ci,

- ledit miroir comportant une structure multicouche comprenant les mêmes matériaux et ayant la même périodicité dans une direction normale à sa surface que lesdits premier et deuxième empilements (5,6) de couches du réseau de diffraction,
- ledit miroir étant orienté de façon à recevoir le faisceau lumineux diffracté sous un angle d'incidence D/2 par rapport à sa surface de telle sorte que le faisceau diffracté par le réseau et transmis par l'ensemble du dispositif reste parallèle au faisceau incident.

**Claims**

1.  A two-dimensional reflection diffraction grating intended to be used under a grazing angle of incidence $\alpha$ for the dispersion of polychromatic or quasi-monochromatic luminous flux in a spectral range extending from X rays to the infrared, said grating including :

    - a substrate (2) having a surface (3),
    - a first (5) and a second (6) stacks of thin biperiodic layers of period d in the thickness direction, including at least ten periods, each period d being formed of layers of at least two different materials (7, 8), said stacks (5, 6) forming contiguous lines (11) of width p/2, parallel to one another, and repeated periodically along a direction parallel to the surface of the substrate (2) with a period p, the second stack (6) being alternate with the first stack (5) and said stacks (5) and (6) being offset in width by d/2 in the direction of periodicity perpendicular to the surface (3) of the substrate (2), so that the stacks (5 and 6) form a thick grating (9) carried by the substrate (2),
    - said thick grating (9) being formed of the doubly periodical repetition of a same unit cell, said unit cell comprising a period of the first stack (5) and a contiguous period of the second stack (6) and
    - **characterized in that** the external surface of the two-dimensional grating does not include a thin surface grating but has a surface relief of null amplitude.

2.  A two-dimensional diffraction grating according to claim 1, **characterized in that** the first stack (5) and the second stack (6) of thin films of the thick grating comprise at least thirty periods and at most sixty periods of thickness d along a direction perpendicular to the surface (3) of the substrate (2).

3.  A two-dimensional diffraction grating according to claim 1 or 2, **characterized in that** the substrate (2) has an upper planar surface (3).

4.  A two-dimensional diffraction grating according to any of the claims 1 to 3, **characterized in that** the substrate (2) has a concave, convex, spherical or aspherical upper surface (3).

5.  A two-dimensional diffraction grating according to any of the claims 1 to 4, **characterized in that** it comprises a protection layer deposited on said first and second stacks (5, 6) of layers.

6.  A two-dimensional diffraction grating according to one at least of the claims 1 to 5 **characterized in that** it comprises a hooking layer between the substrate (2) and the first layer of each stack (5, 6).

7.  A two-dimensional diffraction grating according to any of the claims 1 to 6, **characterized in that** it comprises a barrier layer between successive materials (7, 8).

8.  A two-dimensional diffraction grating according to any of the claims 1 to 7, **characterized in that** the distribution of the indices of the materials (7, 8) forming a unit cell shows symmetries or antisymmetries so that, when in use, at least one order of diffraction is weakened or strengthened.

9.  A two-dimensional diffraction grating according to claim 8, **characterized in that** the distribution of the indices of the materials (7, 8) forming the unit cell shows a symmetry relative to the centre of said unit cell.

10. A two-dimensional diffraction grating according to claim 8 or 9, **characterized in that** the unit cell is formed of two materials (7, 8) having different optical indices.

11. A two-dimensional diffraction grating according to any of the claims 1 to 10 **characterized in that** the period p of the grating and the thickness d of the thin layers of stacks (5, 6) vary continuously according to the position at the surface (12) of the grating so that the ratio d/p remains constant at all points.

12. A spectroscopic device for analysing or filtering a luminous source including at least one two-dimensional diffraction grating **characterized in that** said grating is a diffraction grating according to any of the claims 1 to 11.

13. A spectroscopic device according to claim 12, intended to receive a luminous beam including at least one radiation centred on a wavelength $\lambda_0$ emitted by a luminous source, the radiation of wavelength $\lambda_0$ diffracted by said grating forming a deviation angle D with the incident beam, **characterized in that**

- the two-dimensional diffraction grating is oriented so that the normal to the grating forms an angle B constant within $\pm$ 10% with the bisector of the deviation angle D, wherein the asymmetry angle B is the angle of inclination of the grating relatively to the bisector of the directions of incidence and of emergence,
- the angle D and the wavelength $\lambda_0$ of said radiation verifying the following equation:

$$2\sin\left(\frac{D}{2}\right) x \sin B = q\frac{\lambda_0}{p}$$

wherein p is the period of the grating in the plane of its surface, q is the order of diffraction along this direction.

**14.** A spectroscopic device according to claim 13, **characterized in that** the angle B is defined by the relation:

$$\tan B = \frac{qd}{rp}\left(1 - \frac{\left(1 - \vec{n}\right)}{\left(\frac{r\lambda_0}{2d}\right)^2 - \left(\frac{qd}{rp}\right)^2}\right)$$

wherein d is the period of the grating according to the axis perpendicular to the surface of the grating and r the order of diffraction along this direction and $n$ the average index of the grating.

**15.** A spectroscopic device according to the claims 13 and 14, **characterized in that** it contains a dispersive device including said two-dimensional diffraction grating and a mirror placed before or after said grating,

- said mirror including a multilayered structure comprising the same materials and having the same periodicity along a direction normal to the surface as said first and second stacks (5, 6) of layers of the diffraction grating,
- said mirror being oriented in order to receive the luminous beam diffracted under an incidence angle D/2 relative to its surface so that the beam diffracted by the grating and transmitted by the whole device remains parallel to the incident beam.

**Patentansprüche**

**1.** Zweidimensionales Reflexionsbeugungsgitter zur Verwendung in einem streifenden Einfallswinkel a zur Streuung eines polychromen oder nahezu monochromen Lichtstroms in einem von Röntgenstrahlen bis infrarot erweiterten Spektralbereich, wobei das Gitter Folgendes umfasst:

e in Substrat (2), das eine Oberfläche (3) aufweist,
e inen ersten (5) und einen zweiten (6) Stapel von biperiodischen Dünnschichten einer Periode d in Richtung der Dicke, die mindestens zehn Perioden umfassen, wobei jede Periode d aus Schichten von mindestens zwei verschiedenen Materialien (7, 8) besteht, wobei die Stapel (5, 6) aneinander grenzende Linien (11) einer Breite p/2 bilden, die zueinander parallel sind und sich periodisch in einer Richtung, die zu der Oberfläche des Substrats (2) parallel ist, mit einer Periode p wiederholen, wobei der zweite Stapel 16) mit dem ersten Stapel (5) abwechselt und die Stapel (5) und (6) der Dicke nach um d/2 in der Richtung der Periodizität rechtwinklig zu der Oberfläche (3) des Substrats (2) versetzt sind, so dass die Stapel (5 und 6) ein dickes Gitter (9) bilden, das von dem Substrat (2) getragen wird,

- wobei das dicke Gitter (9) aus der doppelt periodischen Wiederholung derselben Elementarmasche gebildet ist, wobei die Elementarmasche eine Periode des ersten Stapels (5) und eine daran angrenzende Periode des zweiten Stapels (6) umfasst, und
- **dadurch gekennzeichnet, dass** die externe Oberfläche des zweidimensionalen Gitters (9) kein flächiges Gitter, sondern ein Oberflächenrellef mit Nullamplitude aufweist.

**2.** Zweidimensionales Beugungsgitter nach Anspruch 1, **dadurch gekennzeichnet, dass** der erste (5) und der zweite (6) Stapel von Dünnschichten des dicken Gitters mindestens dreißig Perioden und höchstens etwa sechzig Dikkenperioden d in einer Richtung umfassen, die zur Oberfläche (3) des Substrats (2) rechtwinklig ist.

**3.** Zweidimensionales Beugungsgitter nach einem der Ansprüche 1 bis 2, **dadurch gekennzeichnet, dass** das Substrat (2) eine ebene obere Oberfläche (3) aufweiset.

**4.** Zweidimensionales Beugungsgitter nach einem der Ansprüche 1 bis 3, **dadurch gekennzeichnet, dass** das Substrat (2) eine konkave, konvexe, sphärisch oder asphärische obere Oberfläche (3) aufweist.

**5.** Zweidimensionales Beugungsgitter nach einem der Ansprüche 1 bis 4, **dadurch gekennzeichnet, dass** es eine Schutzschicht umfasst, die auf den ersten und zweiten Schichtstapeln (5, 6) abgelegt ist.

**6.** Zweidimensionales Beugungsgitter nach mindestens einem der Ansprüche 1 bis 5, **dadurch gekennzeichnet, dass** es eine Haftschicht zwischen dem Substrat (2) und der ersten Schicht jedes Stapels (5, 6) umfasst.

**7.** Zweidimensionales Beugungsgitter nach einem der Ansprüche 1 bis 6, **dadurch gekennzeichnet, dass** es eine Sperrschicht zwischen aufeinanderfolgenden Materialien (7,8) umfasst.

**8.** Zweidimensionales Beugungsgitter nach einem der Ansprüche 1 bis 7, **dadurch gekennzeichnet, dass** die Verteilung der Brechzahlen der Materialien (7, 8), die eine Elementarmasche bilden, derartige Symmetrien oder Asymmetrien aufweist, dass bei ihrer Verwendung mindestens eine Beugungsordnung abgeschwächt oder verstärkt wird.

**9.** Zweidimensionales Beugungsgitter nach Anspruch 8, **dadurch gekennzeichnet, dass** die Verteilung der Brechzahlen der Materialien (7, 8), welche die Elementarmasche bilden, im Verhältnis zum Zentrum der Elementarmasche eine Symmetrie aufweist.

**10.** Zweidimensionales Beugungsgitter nach Anspruch 8 oder 9, **dadurch gekennzeichnet, dass** die Elementarmasche aus zwei Materialien (7, 8) gebildet wird, die verschiedene optische Brechzahlen aufweisen.

**11.** Zweidimensionales Beugungsgitter nach einem der Ansprüche 1 bis 10, **dadurch gekennzeichnet, dass** der Abstand p des Gitters und die Dicke d der Dünnschichten der Stapel (5, 6) durchgehend gemäß der Position an der Oberfläche (12) des Gitters variieren, so dass das Verhältnis d/p überfall konstant bleibt.

**12.** Spektroskopische Vorrichtung zum Analysieren oder Filtern einer Lichtquelle, die mindestens ein zweidimensionales Beugungsgitter umfasst, **dadurch gekennzeichnet, dass** das Gitter ein Beugungsgitter nach einem der Ansprüche 1 bis 11 ist.

**13.** Spektroskopische Vorrichtung nach Anspruch 12, zum Empfangen eines Lichtstrahls, der mindestens eine Strahlung umfasst, die um eine Wellenlänge $\lambda_0$ zentriert ist, die von einer Lichtquelle emittiert wird, wobei die von dem Gitter gebeugte Strahlung der Wellenlänge $\lambda_0$ einen Ablenkungswinkel D mit dem einfallenden Strahl bildet, **dadurch gekennzeichnet dass**

- das zweidimensionale Beugungsgitter derart orientiert ist, dass die Senkrechte zum Gitter einen konstanten Winkel bei + 10 % mit der Winkelhalbierenden bei dem Ablenkungswinkel D bildet, wobei der Asymmetriewinkel B der Neigungswinkel des Gitters im Verhältnis zu der Winkelhalbierenden der Eintritts- und Austrittsrichtungen ist,
- der Winkel D und die Wellenlänge $\lambda_0$ der Strahlung die folgende Gleichung erfüllen:

$$2\sin(D/2) \times \sin B = q\lambda_0/p,$$

wobei p die Periode des Gitters in der Ebene seiner Oberfläche und q die Beugungsordnung in dieser Richtung ist.

**14.** Spektroskopische Vorrichtung nach Anspruch 13, **dadurch gekennzeichnet, dass** der Winkel B durch die Beziehung

$$\tan B = qd/rp \; \{1-(1-n)/\{(r\lambda_0/2d)^2-(qd/rp)^2\}\}$$

definiert ist, wobei d die Periode des Gitters gemäß der Achse ist, die zur Oberfläche des Gitters rechtwinklig ist, und r die Beugungsordnung in dieser Richtung ist und n die durchschnittliche Brechzahl des Gitters ist.

**15.** Spektroskopische Vorrichtung nach Anspruch 13 und 14, **dadurch gekennzeichnet, dass** sie eine Streuvorrichtung umfaßt, die das zweidimensionale Beugungsgitter und einen Spiegel, der davor oder danach angeordnet ist, umfasst,

- wobei der Spiegel eine mehrschichtige Struktur umfasst, welche die gleichen Materialien umfasst und in einer Richtung, die zu seiner Oberfläche senkrecht ist, die gleiche Periodizität aufweist wie die ersten und zweiten Schichtstapel (5, 6) des Beugungsgitters.
- wobei der Spiegel derart orientiert ist, dass er den Lichtstrahl empfängt, der in einem Einfallswinkel D/2 im Verhältnis zu seiner Oberfläche gebeugt wird, so dass der von dem Gitter gebeugte und von der ganzen Vorrichtung übertragene Strahl zu dem einfallenden Strahl parallel bleibt.

1

ART ANTERIEUR

FIGURE 1

FIGURE 2

FIGURE 3

**FIGURE 4**

# FIGURE 5

**FIGURE 6**

**FIGURE 7**

FIGURE 8

**FIGURE 9**

**FIGURE 10**

FIGURE 11

FIGURE 12

**FIGURE 13**

**FIGURE 14**

30

FIGURE 15

**FIGURE 16**

**FIGURE 17**

FIGURE 18

FIGURE 19

**FIGURE 20**

**FIGURE 21**

**FIGURE 22**

**FIGURE 23**

**FIGURE 24**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3980883 A, FRANKS A.

- US 4915463 A, BARBEE, T. W., Jr.

**Littérature non-brevet citée dans la description**

- **HETTRICK M. et al.** *Appl. Opt.,* 1983, vol. 23, 3921
- **HETTRICK M.** *Appl. Opt.,* 1984, vol. 22, 3221
- **Heinzmann U.** *J. de Physique III,* 01 Septembre 1994, vol. 4 (9), 1625-1637
- **U. Kleineberg et al.** *Mo /Si Multilayer Coated Laminar Phase and Ruled Blaze Gratings for the Soft X-Ray Region,* 1996, vol. 80, 389-392

- **RIFE J.C. et al.** *Physica Scripta,* 1990, vol. 41, 418
- **ERKO A.I. et al.** *Nucl. Instrum. Meth. A,* 1993, vol. 333, 599
- **Mikulik P. et al.** *J. Phys. D : Appl. Phys.,* 2001, vol. 34, A188